# EUROPÄISCHE PATENTSCHRIFT

(11) **EP 1 140 439 B1**
(45) Veröffentlichungstag und Bekanntmachung des Hinweises auf die Patenterteilung: **15.01.2003**
(21) Anmeldenummer: 99958080.6
(22) Anmeldetag: 19.11.1999
(51) Int. Cl.: B26B 19/28, H02K 33/16

(54) **ANTRIEBSEINRICHTUNG FÜR OSZILLIERENDE ELEKTRISCHE PRODUKTE DES PERSÖNLICHEN BEDARFS, INSBESONDERE TROCKENRASIERER**
ACTUATING DEVICE FOR OSCILLATING ELECTRIC PRODUCTS OF PERSONAL USE, ESPECIALLY ELECTRIC RAZORS
DISPOSITIF DE COMMANDE POUR PRODUITS ELECTRIQUES OSCILLANTS D'USAGE INDIVIDUEL, EN PARTICULIER RASOIRS ELECTRIQUES

(30) Priorität: 23.12.1998 DE 19859622
(43) Veröffentlichungstag der Anmeldung: 10.10.2001
(73) Patentinhaber: Braun GmbH, 61466 Kronberg (DE)
(72) Erfinder: BRUM, Thomas, D-61440 Oberursel (DE); KLÖS, Alexander, D-65719 Hofheim (DE); PORT, Holger, D-65824 Schwalbach (DE); PORT, Werner, D-65824 Schwalbach (DE); SCHAAF, Uwe, D-65812 Bad Soden (DE)
(86) Internationale Anmeldenummer: EP9908889
(87) Internationale Veröffentlichungsnummer: WO00038891

(56) Entgegenhaltungen:
- EP-A- 0 860 933
- WO-A-95/26261
- DE-A- 4 117 225
- US-A- 3 898 732
- US-A- 5 736 797

## Beschreibung

Die vorliegende Anmeldung betrifft eine Antriebseinrichtung zum Antreiben einer ozillierend bewegbaren Arbeitseinheit von elektrischen Produkten des persönlichen Bedarfs, insbesondere Trockenrasierer.

Als Haushaltsgeräte mit einer oszillierenden Arbeitseinheit sind beispielsweise Trockenrasierer bekannt, die die Barthaare mit einem hin- und herschwingenden Schermesserblock abtrennen. Oszillierende Trockenrasierer werden herkömmlicherweise durch einen rotatorischen Elektromotor, beispielsweise einen Gleichstrommotor, angetrieben. Die rotatorische Bewegung der Motorachse wird dabei durch ein geeignetes Exzenter-Getriebe in eine lineare Schwingbewegung umgewandelt.

Im Gegensatz zu solchen Getriebelösungen kann die lineare Schwingbewegung der Arbeitseinheit auch durch einen Direktantrieb unmittelbar erzeugt werden. Hierdurch entfällt das Exzenter-Getriebe zur Umwandlung der rotatorischen Motorbewegung in eine lineare Oszillation.

Eine Form eines quasi linearen Direktantriebs stellt beispielsweise der sogenannte Schwingankermotor dar (vgl. beispielsweise DE 31 39 523 A1). Nachteilig bei solchen Schwingankermotoren ist jedoch, daß sie zum einen nur mit einer 220 Volt Netzspannung betrieben werden können und deshalb ungeeignet für Batteriegeräte sind und sie zum anderen sehr große magnetische Streufelder erzeugen.

Ferner ist für Trockenrasierer ein Vibrationsantrieb gemäß dem Oberbegriff des Patentanspruchs 1 bekannt, bei dem eine drehschwingende Rotoranordnung durch einen Seilzug über Umlenkrollen mit dem Messerblock verbunden ist und diesen antreibt (vgl. DE 41 17 225 A1). Dieser mit Netzspannung betriebene Vibrationsantrieb besitzt jedoch einen relativ geringen Wirkungsgrad und ist hinsichtlich seiner Größe und Ausmaße unbefriedigend. Die Nachgiebigkeit des Antriebs begrenzt dessen Wirksamkeit.

Als Direktantrieb für einen Trockenrasierer ist femer ein linearer Permanentmagnet-Motor bekannt, bei dem über einem Stator mit einer Erregerwicklung eine Bewegungseinheit mit Permanentmagneten an Blattfedern nach Art einer Hängebrücke aufgehängt ist und einen angekoppelten Schermesserblock antreibt (vgl. WO 95/26261). Ein Sensor überwacht die Geschwindigkeit der Bewegungseinheit in Abhängigkeit derer eine Steuerung die dem Motor zugeführte elektrische Leistung derart verändert, daß die Schwingungsamplitude der Bewegungseinheit konstant gehalten wird. Dieser bekannte Direktantrieb für Trockenrasierer ist jedoch in seinem Aufbau kompliziert und wenig kompakt. Die für einen guten Wirkungsgrad erforderliche Präzision ist nur mit großem Aufwand zu erreichen.

Der vorliegenden Erfindung liegt daher die Aufgabe zugrunde, eine verbesserte Antriebseinrichtung der genannten Art zu schaffen, die die Nachteile bekannter Antriebe vermeidet. Insbesondere soll die Antriebseinrichtung einen einfachen Aufbau besitzen und einen stabilen Betrieb mit hohem Wirkungsgrad erreichen.

Erfindungsgemäß wird diese Aufgabe gelöst durch eine Antriebseinrichtung der genannten Art mit einem Permanentmagnet-Motor, der einen Stator mit einer Erregerwicklung und einen im Statorfeld angeordneten, um eine Drehachse drehbar gelagerten Rotor mit mindestens einem Permanentmagneten aufweist, einer Rückstelleinrichtung zur Rückstellung des Rotors in eine Ruhelage derart, daß der Rotor um die Ruhelage schwingen kann, einer Kopplungseinrichtung zur Kopplung des Rotors mit der Arbeitseinheit, wobei die Kopplungseinrichtung von der Drehachse beabstandet mit dem Rotor verbunden ist, einer Erfassungseinrichtung zur Erfassung der Schwingbewegung des Rotors, und einer Ansteuereinheit zur Ansteuerung des Permanentmagnet-Motors in Abhängigkeit der erfaßten Schwingbewegung, wobei Frequenzsteuermittel zur Ansteuerung des Permanentmagnet-Motors mit einer etwa der Resonanzfrequenz des Rotors entsprechenden Frequenz vorgesehen sind.

Die rotatorische Lagerung der als Rotor ausgebildeten permanentmagnetischen Bewegungseinheit besitzt den Vorteil hoher Stabilität und Steifheit. Im Gegensatz zu einer Federaufhängung nach Art einer Hängebrücke beim Linear Motor erfährt der Rotor beim rotatorisch oszillierenden Motor keine Schaukelbewegung. Der rotatorisch oszillierende Motor führt in einem Trockenrasierer zu einem geringeren Scherblattverschleiß und erlaubt einen geringeren Abstand zwischen Scherblatt und Messerblöcken. Vorteilhafterweise kann der Luftspalt zwischen Rotor und Stator sehr klein, insbesondere etwa 0,5 mm oder noch weniger betragen. Durch die rotatorische Lagerung besteht keine Gefahr einer Berührung zwischen Rotor und Stator. Dies bewirkt einen hohen Wirkungsgrad.

Die Arbeitseinheit ist nicht an die Drehachse des Rotors angekoppelt, sondern durch die Kopplungseinrichtung exzentrisch unmittelbar mit dem Körper des Rotors verbunden. Hierdurch werden günstige Hebelverhältnisse und eine hohe Steifigkeit bewirkt. Insbesondere bei Oszillationen hoher, die Netzfrequenz weit übersteigender Frequenz besitzt die steife und unmittelbare Übertragung der Drehbewegung des Rotors auf die Arbeitseinheit eine hohe Effizienz, sie ermöglicht erst solch hochfrequente Oszillationen.

Die Ansteuereinheit, der über die mit ihr verbundene Erfassungseinrichtung die Schwingbewegung des Rotors rückgekoppelt wird, steuert die Erregerwicklung des Stators derart an, daß der Rotor mit einer Frequenz schwingt, die in etwa der Resonanzfrequenz des Systems aus Rotor und Rückstelleinrichtung entspricht. Der Betrieb in Resonanz bewirkt einen sehr hohen Wirkungsgrad. Durch die Ansteuereinheit können im Gegensatz zu wuchtigen netzbetriebenen Geräten mit geringem Wirkungsgrad sehr hohe Betriebsfrequenzen im Bereich von 10⁴ min⁻¹ erreicht werden, wodurch die Rasierzeit verkürzt werden kann. In Verbindung mit der steifen Ankopplung der Arbeitseinheit können Laststöße, wie sie beim Rasieren auftreten, sehr schnell, insbesondere von einer Halbschwingungsperiode zur nächsten, ausgeregelt werden. Dadurch erhöht sich die Bearbeitungsqualität und -geschwindigkeit. Aufgrund des hohen Wirkungsgrads kann der Antrieb klein dimensioniert werden. In Verbindung mit der Ausbildung der Bewegungseinheit als Rotor kann damit ein sehr kompakter Aufbau bewirkt werden.

Gemäß einer bevorzugten Ausführung der Erfindung besitzt der Rotor verschiedene Abschnitte aus verschiedenen Materialien. Insbesondere kann der Rotor einen innenliegenden Kern aus einem weichmagnetischen, hochpermeablen Material und Pole aus permanentmagnetischem Material aufweisen. Umgekehrt kann der Rotor auch einen innenliegenden Kern aus permanentmagnetischem Material und Pole aus einem weichmagnetischen, hochparmeablen Material enthalten. Aufgrund von kleineren Streuverlusten der Pole aus Permanentmagneten ist das Lüftspaltfeld und damit die Ausgangsleistung und der Wirkungsgrad des Antriebs höhe als bei der zweiten Anordnung. Femer ist die Induktivität des Motors von den Klemmen der Erregerwicklung aus gesehen kleiner. Hierdurch kann der Strom schneller ansteigen, was ebenfalls die Ausgangsleistung erhöht. Vorteilhafterweise ist der Rotor derart ausgebildet, daß die Induktivität unabhängig von der Lage des Rotors ist. Dies erleichtert die elektronische Ansteuerung des Motors. Ferner ist vorteilhafterweise die Achse des Rotors in das weichmagnetische Material und nicht in das relativ schwer zu bearbeitende Magnetmaterial eingearbeitet. Dies erleichtert die Herstellung wesentlich.

Der Rotor kann auch vollständig aus permanentmagnetischem Material bestehen. Vorzugsweise ist hierbei die Drehachse nicht aus permanentmagnetischem Material. Die vollständige Ausführung aus permanentmagnetischem Material ist besonders vorteilhaft hinsichtlich des Wirkungsgrads. Die zuvor genannte Ausführung besitzt jedoch Vorteile hinsichtlich der Herstellung und der Bearbeitung.

Gemäß einer bevorzugten Ausführung der Erfindung ist die Rückstelleinrichtung mit dem Rotor von dessen Drehachse beabstandet verbunden. Die Rückstelleinrichtung greift also nicht an der Drehachse des Rotors an. Durch den Angriff am Rotor mit einem Hebelarm wird eine präzise Schwingung des Rotors bewirkt. Die Rückstelleinrichtung kann grundsätzlich auch an der Arbeitseinheit angreifen. Vorzugsweise wird die Rückstellkraft über die Kopplungseinrichtung, die die Arbeitseinheit mit dem Rotor verbindet, auf den Rotor übertragen. Die Rückstelleinrichtung ist also mit der Kopplungseinrichtung in Wirkverbindung.

Die Rückstellung des Rotors aus ausgelenkten Lagen in seine Ruhestellung kann auf verschiedene Weisen bewirkt werden. Beispielsweise kann die federartige Rückstellkraft durch magnetische Felder erzeugt werden, zum Beispiel können als Magnetrückstellvorrichtung Rückstellmagnete am Rotor angebracht werden. Magnetische Rückstellkräfte können auch in Kombination mit anderen Rückstelleinrichtungen verwendet werden. Vorzugsweise jedoch wird die Rückstellung des Rotors durch eine mechanische Federeinrichtung bewirkt. Hierbei können Blattfedern oder Schraubenfedern verwendet werden. Vorzugsweise besitzt die Rückstelleinrichtung eine Rückstellfeder mit einem Befestigungsabschnitt zur Befestigung am Rotor und einen den Befestigungsabschnitt umgebenden Spiralabschnitt. Hierdurch läßt sich eine besonders kompakte und platzsparende Anordnung der Rückstelleinrichtung erreichen. Vorzugsweise ist die Rückstelleinrichtung auf der Stimseite des Motors angeordnet, insbesondere kann der Befestigungsabschnitt mit dem Rotor an dessen Stirnseite verbunden sein.

Um durch die Rückstelleinrichtung nur wenig Bauraum auszufüllen, ist die Rückstellfeder vorzugsweise eben ausgebildet. Der Befestigungsabschnitt und der diesen umgebende Spiralabschnitt erstrecken sich in einer Ebene. Die Dicke der Rückstellfeder ist durch die Materialstärke gegeben.

Eine besonders günstige Ausbildung der Rückstellfeder ist dadurch gegeben, daß der Befestigungsabschnitt im wesentlichen Z-förmig mit einem Paar sich gegenüberliegenden, zueinander im wesentlichen parallelen Eingriffsabschnitten ausgebildet ist und der Spiralabschnitt ein Paar Spiralarme, die sich von den Eingriffsabschnitten aus spiralförmig nach außen erstrecken, aufweist. Die Eingriffsabschnitte sind derart federnd biegbar, daß der Abstand der Eingriffsabschnitte zueinander veränderbar ist. Die Rückstellfeder ist also mit den Eingriffsabschnitten einspreizbar. Der Federkörper der vorzugsweise aus Federstahl bestehenden Rückstellfeder kann im Querschnitt verschieden ausgebildet sein, vorzugsweise ist er rechteckig.

Gemäß einer vorteilhaften Ausführung der Erfindung ist der Rotor stehend angeordnet, d. h. mit seiner Stimseite der Arbeitseinheit zugewandt. Die Kopplungseinrichtung ist auf einer Stirnseite des Motors angeordnet. Hierdurch kann ein sehr kompakter Aufbau erzielt werden. Die Arbeitseinheit kann sehr nahe am Rotor angeordnet werden ohne von dem Stator behindert zu sein. Die Freiheit bei der Gestaltung des Stators bleibt unbeschränkt.

Gemäß einer anderen vorteilhaften Ausführung der Erfindung kann der Rotor auch liegend angeordnet sein, d. h. die Umfangsseite des Rotors ist der Arbeitseinheit zugewandt. Die Kopplungseinrichtung ist vorzugsweise auf der Umfangsseite des Rotors angeordnet. Diese Anordnung besitzt Vorteile hinsichtlich der Lagerung des Rotors. Die Stirnseite des Rotors braucht nicht für die Kopplungseinrichtung zugänglich zu sein, bei der Gestaltung der Abstützung der Drehachse bestehen daher größere Freiheitsgrade.

In Weiterbildung der Erfindung ist die Kopplungseinrichtung in der Bewegungsrichtung der Arbeitseinheit unnachgiebig und senkrecht zur Bewegungsrichtung der Arbeitseinheit mit Spiel ausgebildet. Senkrecht zur Bewegungsrichtung der Arbeitseinheit ist die Kopplungseinrichtung also nachgiebig, während sie in dieser Bewegungsrichtung starr ist. Die Antriebsbewegung des Rotors wird unmittelbar, ohne Verzögerung und präzise auf die Arbeitseinheit übertragen. Die Nachgiebigkeit senkrecht zur Bewegungsrichtung erlaubt einen Ausgleich einer entsprechenden Bewegungskomponente des Rotors, die durch dessen Drehbewegung entsteht.

Um einen einfachen Aufbau des Kopplungsstrangs mit hoher Steifigkeit zu erreichen, ist die Kopplungseinrichtung vorzugsweise nur zweiteilig. Ein erstes Kopplungselement, das fest mit dem Rotor verbunden ist, und ein zweites Kopplungselement, das fest mit der Arbeitseinheit verbunden ist, sind miteinander unmittelbar in Eingriff, wobei die beiden Kopplungselemente vorzugsweise starr sind. Die Ausführung der Kopplungseinrichtung mit nur zwei starren Elementen bewirkt eine unmittelbare Übertragung der Antriebsbewegung ohne Verzögerung und erlaubt hohe Oszillationsfrequenzen. Eine Nachgiebigkeit, wie sie bei bekannten Kopplungseinrichtungen mit Seilzügen gegeben ist, ist vermieden.

Eine besonders einfache und steife Ausführung wird dadurch erreicht, daß das eine Kopplungselement ein Stift und das andere Kopplungselement eine Ausnehmung, insbesondere ein Langloch, ist. Die Anordnung der beiden Kopplungselemente ist grundsätzlich austauschbar. Vorzugsweise jedoch ist der Stift am Rotor und die Ausnehmung an der Arbeitseinheit vorgesehen. Dies erleichtert die Montage der Rückstelleinrichtung, da diese hierdurch unabhängig von der Arbeitseinheit angebracht werden kann, und darüber hinaus die Handhabung der Arbeitseinheit bei der Reinigung oder dergleichen. Bei einer Anordnung der Kopplungseinrichtung an der Stirnseite des Rotors erstreckt sich der Stift vorzugsweise parallel zu der Drehachse des Rotors. Bei einer Anordnung an der Umfangsseite des Rotors erstreckt sich der Stift vorzugsweise senkrecht zu der Drehachse des Rotors.

In Weiterbildung der Erfindung sind ein Paar Kopplungseinrichtungen vorgesehen, die verschiedenen Arbeitseinheiten zugeordnet sind und auf gegenüberliegenden Seiten der Drehachse des Rotors angeordnet sind derart, daß die Arbeitseinheiten gegenläufig angetrieben werden. Die gegenläufige Bewegung der Arbeitseinheiten bewirkt eine Vibrationsreduzierung z.B. an Gehäuseteilen, die Trägheiten der Arbeitseinheiten werden miteinander kompensiert. Insbesondere in Verbindung mit der stehenden Anordnung des Rotors ist die Anordnung der Kopplungseinrichtungen auf den gegenüberliegenden Seiten der Drehachse des Rotors vorteilhaft. Die entsprechenden Kopplungselemente sind starr mit dem Rotor verbunden. Die Kopplungseinrichtungen sind durch den Rotor starr miteinander verbunden. Die Arbeitseinheiten schwingen exakt gegenläufig. Auch bei unterschiedlichen Belastungen der Arbeitseinheiten schwingen diese mit der gleichen Oszillationsfrequenz. Die Ansteuerung des Motors wird hierdurch erleichtert.

Gemäß einer weiteren vorteilhaften Ausführung der Erfindung können mehrere Rotoren vorgesehen sein, die jeweils einer Arbeitseinheit zugeordnet sind. Jede Arbeitseinheit wird also von einem eigenen Rotor angetrieben. Jeder Rotor kann dabei optimal der entsprechenden Arbeitseinheit angepaßt werden. Vorzugsweise besitzen die Rotoren eine gemeinsame Drehachse. Dies vereinfacht den Aufbau der Antriebseinrichtung. Die Rotoren können grundsätzlich gleichpolig ausgebildet sein und gleichphasig schwingen. Vorzugsweise jedoch weisen die Rotoren unterschiedliche Magnetisierungsrichtungen auf derart, daß sie zueinander gegenläufig schwingen. Dies bewirkt in hohem Maße eine Vibrationsreduzierung. Nicht nur die Trägheiten der Arbeitseinheiten, sondern auch die Trägheiten der Rotoren werden gegeneinander kompensiert.

Die Schwingbewegung des Rotors kann über verschiedene Bewegungsgrößen erfaßt werden. Zur Steuerung der dem Motor zugeführten Energie kann beispielsweise die Rotorauslenkung oder die auf den Rotor wirkende Rückstellkraft der Rückstelleinrichtung erfaßt und an die Ansteuereinheit rückgekoppelt werden. Vorzugsweise wird zur Ansteuerung des Motors aber die Rotordrehgeschwindigkeit als die die Rotorschwingung kennzeichnende Bewegungsgröße erfaßt und an die Ansteuereinheit zurückgekoppelt.

Die Schwingungsbewegung kann grundsätzlich mit verschiedenen Sensoren erfaßt werden, z.B. Hall-Sensoren oder optischen Sensoren.

Eine vorteilhafte Ausführung der Erfindung besteht darin, daß die Erfassungseinrichtung eine Sensoreinrichtung zur Erfassung eines von dem Permanentmagneten des Rotors ausgehenden Streufluß aufweist. Die Erfassung der Schwingbewegung des Rotors wird also frei von Hilfsmagneten bewirkt. Die Rotorbewegung wird mittels des unmittelbar von dem Permanentmagneten des Rotors ausgehenden magnetischen Flusses erfaßt. Die Permanentmagneten bilden einen Teil der Erfassungseinrichtung.

Vorzugsweise ist die Erfassungseinrichtung in den Stator integriert, insbesondere ist sie an einem Polschuh des Stators angeordnet. Dabei kann die Sensorspule einfach um einen Zahn eines Polschuhs des Stators gewickelt sein. Die integrierte Anordnung der Sensoreinrichtung in dem Stator hat zum Vorteil, daß ein platzsparender dichter Aufbau der Antriebseinrichtung erzielt werden kann.

Um die Genauigkeit der Erfassung der Schwingbewegung des Rotors zu erhöhen, besitzt die Erfassungseinrichtung eine Kompensationseinrichtung zur Kompensierung eines Fehleranteils im Signal der Sensoreinrichtung. Zusätzlich zum Fluß der Permanentmagneten kann der zum Motorstrom proportionale magnetische Fluß der Erregerwicklung in der Sensoreinrichtung eine Spannung induzieren, deren Grundwelle ebenfalls im Ausgangssignal der Sensoreinrichtung enthalten ist. Vorzugsweise besitzt die Kompensationseinrichtung einen Stromsensor zur Erfassung eines Motorstromes und eine Subtraktionseinheit zur Subtraktion eines dem Motorstrom proportionalen Stromsensorsignales vom Signal der Sensoreinrichtung. Die Erfassungseinrichtung stellt also unabhängig vom Betriebszustand des Motors ein Ausgangssignal bereit, das ein Maß für die Rotordrehgeschwindigkeit ist. Der Motor kann dementsprechend angesteuert werden, daß für unterschiedliche Lasten ein Betrieb des Motors mit konstanter Schermessergeschwindigkeit bei seiner Resonanzfrequenz gegeben ist.

Die Erfassung der Schwingbewegung des Rotors kann auch indirekt erfolgen. Gemäß einer anderen Ausführung der Erfindung ist die Antriebseinrichtung frei von einem Schwingungsbewegungssensor. Der Ansteuereinheit wird ein dem Motorstrom proportionales Signal zurückgeführt. Eine Bewegung des permanentmagnetischen Rotors hat über die in der Ständerspule induzierte Spannung eine direkte Auswirkung auf den Motorstrom. Der Motorstrom kann mit einem geeigneten Stromsensor detektiert werden und dieses Signal wird anstatt des Signals eines Bewegungssensors zur Ansteuerung des Motors zur Ansteuereinheit zurückgekoppelt. Unter Verwendung eines zweiten Signals, welches ein Maß für die Grundwellenamplitude der Klemmenspannung, die den Motor antreibt, ist, kann zusammen mit dem Motorstromsignal ein Rückschluß auf die im Motor induzierte Spannung erfolgen. Diese Spannung ist der Drehgeschwindigkeit des Rotors proportional, so daß auf diese Weise eine Regelung dieser Größe bei unterschiedlichen Lasten ermöglicht wird.

Um die gewünschte Schwingung des Rotors zu bewirken, regelt die Ansteuereinheit mittels einer Regeleinrichtung die dem Motor zugeführte elektrische Energie in Abhängigkeit der Schwingbewegung des Rotors. Die Regeleinrichtung weist einen Spitzenwertdetektor zur Erfassung eines Signalspitzenwerts der Erfassungseinrichtung auf und regelt die dem Motor zugeführte Energie in Abhängigkeit des erfaßten Spitzenwerts. Die Reduzierung der Schwingbewegungssignale auf einen Wert vereinfacht die Ansteuerung der Erregerwicklung ohne die Genauigkeit beachtlich zu vermindern. Hierbei kann der detektierte Spitzenwert mit einem Sollwert verglichen werden und die dem Motor zugeführte Energie in Abhängigkeit der Differenz geregelt werden.

Um auf die Schwingbewegung des Rotors Einfluß zu nehmen, kann die Energiezuführung an den Motor in verschiedener Weise verändert werden. Vorzugsweise weist die Ansteuereinheit einen Signalgenerator zur Ansteuerung des Motors mit bipolaren Spannungspulsen auf, wobei eine Modulationseinrichtung zur Modulation der Spannungspulse in Abhängigkeit der Schwingbewegung des Rotors vorgesehen ist. Gemäß einer ersten Ausführung der Erfindung kann auf die Schwingungsamplitude des Rotors Einfluß genommen werden, indem eine Phasenmodulation der bipolaren Pulse, also eine sogenannte Puls-Phasen-Modulation bewirkt wird. Mittels eines von der Regeleinrichtung steuerbaren Phasenschiebers kann eine Verschiebung der bipolaren Spannungspulse relativ zum Schwingungszyklus des Rotors vorgenommen werden. Gemäß einer weiteren Ausführung der Erfindung kann die dem Antrieb zugeführte elektrische Leistung durch Puls-Amplituden-Modulation gesteuert werden. Hierbei wird die Amplitude der Spannungspulse verändert und hierdurch die Menge der elektrischen Energie eines Spannungspulses gesteuert. Insbesondere kann femer das Ausgangssignal des Signalgenerators derart moduliert werden, daß die bipolaren Pulse zur Ansteuerung des Motors in ihrer Impulsweite vom Regler beeinflußt werden. Es wird also bei der sogenannten Puls-Weiten-Modulation die Dauer der Spannungspulse verändert und damit eine Variation der zum Motor zugeführten Leistung bewirkt. Grundsätzlich können die verschiedenen Formen der Modulation miteinander kombiniert werden. Die Verwendung einer einzelnen Form der Modulation vereinfacht jedoch die Steuerungselektronik und erreicht eine ausreichende Genauigkeit.

Gemäß einer bevorzugten Ausführung der Erfindung ist der Signalgenerator derart ausgebildet, daß die Spannungspulse in konstanter Phasenbeziehung zu der Schwingbewegung des Rotors erzeugt werden. Erfolgt zur Steuerung der zugeführten Energiemenge eine Puls-Weiten-Modulation, so werden im Gegensatz zu für ähnliche Anwendungen üblichen Puls-Weiten-Modulationen die Spannungspulse nicht zu einem festgelegten Anfangszeitpunkt erzeugt und nur das Ende der Spannungspulse verändert, sondern die Antriebspulse werden symmetrisch zu beiden Seiten verbreitert bzw. verschmälert. Es wird also auch bei einem veränderten Tastgrad der Puls-Weiten-Modulierung eine starre Phasenkoppelung zwischen dem rückgekoppelten Sensorsignal, das die Schwingbewegung des Rotors kennzeichnet, und der Grundwelle der pulsweitenmodulierten Antriebspulse erhalten. Hierdurch kann ein besonders hoher Wirkungsgrad erzielt werden. Der Permanentmagnet-Motor wird exakt in Resonanz betrieben.

Vorzugsweise wird von der Regeleinrichtung mindestens ein variabler Gleichspannungspegel erzeugt, welcher mittels geeigneter Komparatoren mit einem vom Signalgenerator synchron zur Schwingung des Rotors erzeugten Dreieckssignals verglichen wird, wobei die Pulsweite der Spannungspulse entsprechend den Schnittpunkten des Dreieckssignals mit dem Gleichspannungspegel festgelegt wird.

Die Ansteuerung des Motors mit den bipolaren Spannungspulsen kann grundsätzlich auf verschiedene Weisen erfolgen. Gemäß einer Ausführung der Erfindung weisen die Frequenzsteuermittel einen Oszillator zur Ansteuerung des Rotors mit einer vorgegebenen Frequenz auf. Diese vorgegebene Frequenz entspricht vorzugsweise etwa der Resonanzfrequenz des Rotors in Verbindung mit der Rückstelleinrichtung.

Um einen besonders hohen Wirkungsgrad zu erreichen und einen Betrieb in Resonanz auch bei Veränderungen der Resonanzfrequenz zu bewirken, weisen gemäß einer weiteren Ausführungsform die Frequenzsteuermittel eine selbstschwingende Rückkopplungsschleife auf. Diese kann insbesondere einen Phasenschieber für das Signal der Erfassungseinrichtung, den Signalgenerator zur Festlegung der zeitlichen Abfolge der bipolaren Spannungspulse, eine Leistungsstufe zur Ansteuerung des Motors und die Regeleinrichtung zur Regelung der dem Motor zugeführten elektrischen Energie aufweisen. Die Ansteuerung des Motors in einer selbstschwingenden Schleife besitzt den großen Vorteil, daß die Ansteuerfrequenz immer exakt auf Resonanz gehalten wird, d. h. unabhängig von einer Verschiebung der Resonanzfrequenz beispielsweise durch Belastung des Antriebs mit einer geschwindigkeitsabhängigen Kraft. Einbrüche der Schwingungsamplitude durch Außer-Tritt-geraten der Ansteuerung sind vermieden.

Insbesondere bei Trockenrasierern ist es ein wichtiger Aspekt, eine kompakte Anordnung der Antriebseinrichtung zu erreichen. Die Rasierer sollen insgesamt klein und handlich beschaffen sein, während andererseits ausreichend Platz für einen Energiespeicher wie beispielsweise einen Akku benötigt wird. Vorteilhaft gestaltete Trockenrasierer weisen einen relativ zu einem Rasierergehäuse schwenkbaren Schwenkkopf auf, der zumindest eine Messereinheit trägt, die von der Antriebseinrichtung antreibbar ist. Durch den Schwenkkopf kann eine optimale Anstellung der Messereinheit an die zu rasierende Gesichtskontur erreicht werden. Gemäß einem weiteren Aspekt der Erfindung ist bei einem Trockenrasierer der genannten Art die Antriebseinrichtung in den Schwenkkopf integriert.

Die Antriebseinrichtung ist also zusammen mit dem Schwenkkopf relativ zu dem Rasierergehäuse schwenkbar. Ein besonderer Vorteil dieser Anordnung besteht darin, daß eine größere Beweglichkeit des Schwenkkopfs ermöglicht wird. Die Ankopplung der Antriebseinrichtung an die zumindest eine Messereinheit braucht keinen Freiheitsgrad bzw. Beweglichkeit aufweisen, da eine Relativbewegung zwischen der mit dem Schwenkkopf schwenkbaren Messereinheit und der Antriebseinrichtung nicht nötig ist. Die Antriebseinrichtung schwingt mit dem Schwenkkopf mit.

Gemäß einer bevorzugten Ausführung der Erfindung ist die Antriebseinrichtung mit der Drehachse des Rotors stehend angeordnet, insbesondere kann die Schwenkachse des Schwenkkopfs von der Drehachse des Rotors senkrecht geschnitten sein. Bei einer Ruhestellung des Schwenkkopfs, d. h. bei einer zu dem Rasierergehäuse nicht ausgeschwenkten Stellung, kann die Drehachse des Rotors parallel zur Längsachse des Rasierergehäuses verlaufen. Vorteilhafterweise können mehrere parallele Messereinheiten von einem Rotor gegenläufig angetrieben und starr miteinander gekoppelt werden.

Eine besonders vibrationsarme Ausführung kann dadurch gegeben sein, daß die Drehachse des Rotors liegend angeordnet ist.

Die vorliegende Erfindung wird nachfolgend anhand von Ausführungsbeispielen und zugehöriger Zeichnungen näher erläutert. In diesen zeigen:
- Figur 1: eine schematische Darstellung eines oszillierenden einphasigen bürstenlosen Gleichstrommotors einer Antriebseinrichtung in einer Draufsicht gemäß einer ersten Ausführung der Erfindung,
- Figur 2: eine schematische Darstellung des Motors gemäß Figur 1 in einer Seitenansicht,
- Figur 3: eine schematische Darstellung eines oszillierenden einphasigen bürstenlosen Gleichstrommotors einer Antriebseinrichtung in einer Draufsicht ähnlich Figur 1 gemäß einer weiteren Ausführung der Erfindung,
- Figur 4: eine schematische Darstellung des Motors gemäß Figur 3 in einer Seitenansicht,
- Figur 5: eine schematische Draufsicht auf den Motor gemäß Figur 3, die die Ankopplung eines Mittelschneiders über eine Schwingbrücke zeigt,
- Figur 6: eine schematische Darstellung der Schwingbrücke aus Figur 5 in einer Seitenansicht,
- Figur 7: eine schematische Darstellung eines oszillierenden einphasigen bürstenlosen Gleichstrommotors gemäß einer weiteren Ausführungsform mit liegender Anordnung des Rotors in einer Seitenansicht in Richtung der Drehachse des Rotors,
- Figur 8: eine schematische Darstellung des Motors aus Figur 7 in einem Mittelschnitt, der die Drehachse des Rotors enthält,
- Figur 9: eine Seitenansicht eines Trockenrasierers mit einer Antriebseinrichtung, die in einen Schwenkkopf des Trockenrasierers integriert ist, gemäß einer Ausführung der Erfindung, in einer Teilschnittdarstellung entlang der Linie B-B gemäß Figur 11,
- Figur 10: einen vergrößerten Ausschnitt des in Figur 9 mit X bezeichneten Bereichs des Schwenkkopfs, der die Antriebseinrichtung in einer Schnittdarstellung zeigt,
- Figur 11: eine Seitenansicht des Schwenkkopfs aus Figur 9,
- Figur 12: eine Seitenansicht des Schwenkkopfs mit der darin integrierten Antriebseinrichtung gemäß der Ausführung der Figuren 9 bis 11,
- Figur 13: eine Seitenansicht des Schwenkkopfs in einer Schnittdarstellung entlang der Linie A-A in Figur 12,
- Figur 14: eine Draufsicht auf den Schwenkkopf der Ausführung gemäß Figuren 9 bis 13,
- Figur 15: eine Seitenansicht des Permanentmagnet-Motors der Antriebseinrichtung der Ausführung gemäß den Figuren 9 bis 14,
- Figur 16: eine Schnittdarstellung des Motors entlang der Linie A-A in Figur 15,
- Figur 17: eine Draufsicht auf den Motor aus Figur 15, die die Rückstellfeder zeigt,

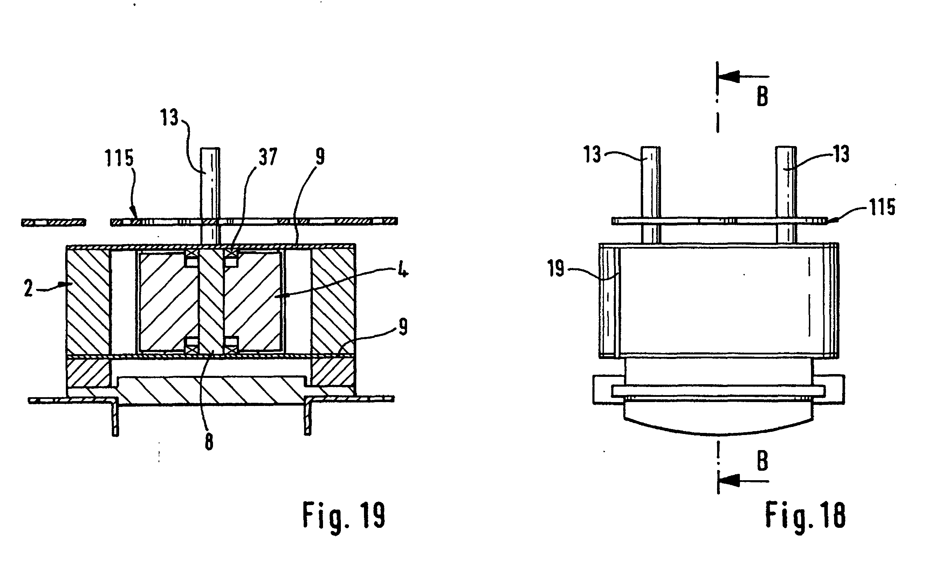

- Figur 18: eine ungeschnittene Darstellung des Motors in einer Perspektive ähnlich Figur 16,
- Figur 19: eine Längsschnittdarstellung des Motors entlang der Linie B-B in Figur 18,
- Figur 20: eine Draufsicht auf die Rückstellfeder aus Figur 17 in einer vergrößerten Darstellung,
- Figur 21: ein Diagramm, das den zeitlichen Verlauf (a) der Drehgeschwindigkeit und der Auslenkung des Rotors, (b) der Antriebspulse und des Motorstroms, (c) des Ausgangssignals einer Schwingungssensoreinrichtung, (d) das Ausgangssignal eines Stromsensors und (e) das der Drehgeschwindigkeit entsprechende Nutzsignal der Schwingungssensoreinrichtung, das vom Einfluß einer vom Motorstrom induzierten Spannung bereinigt ist, zeigt,
- Figur 22: ein Diagramm, das die Betriebsweise des Motors, insbesondere die Rotorauslenkung, die Rotorgeschwindigkeit und die Antriebspulse im zeitlichen Verlauf zeigt,
- Figur 23: ein Blockschaltbild einer Ansteuereinheit zur Ansteuerung des Motors wahlweise mit einer festen Frequenz oder in einer selbstschwingenden Schleife unter Rückführung eines zur Rotorschwingung synchronen Sensorsignals,
- Figur 24: ein Blockschaltbild der Ansteuereinheit des Motors mit einer Puls-Weiten-Modulierung der Antriebspulse in einer selbstschwingenden Schleife,
- Figur 25: ein Diagramm, das das Sensornutzsignal gemäß Figur 21(e) und dessen Verarbeitung im zeitlichen Verlauf zeigt, wobei das Sensornutzsignal im Verhältnis zu Störkomponenten groß ist,
- Figur 26: ein Diagramm ähnlich Figur 25, wobei das Sensomutzsignal im Verhältnis zu Störkomponenten relativ klein ist und die Verarbeitung mit und ohne Hysterese dargestellt ist, und
- Figur 27: ein Diagramm, das die Generierung der puls-weiten-modulierten Antriebspulse im zeitlichen Verlauf verdeutlicht.

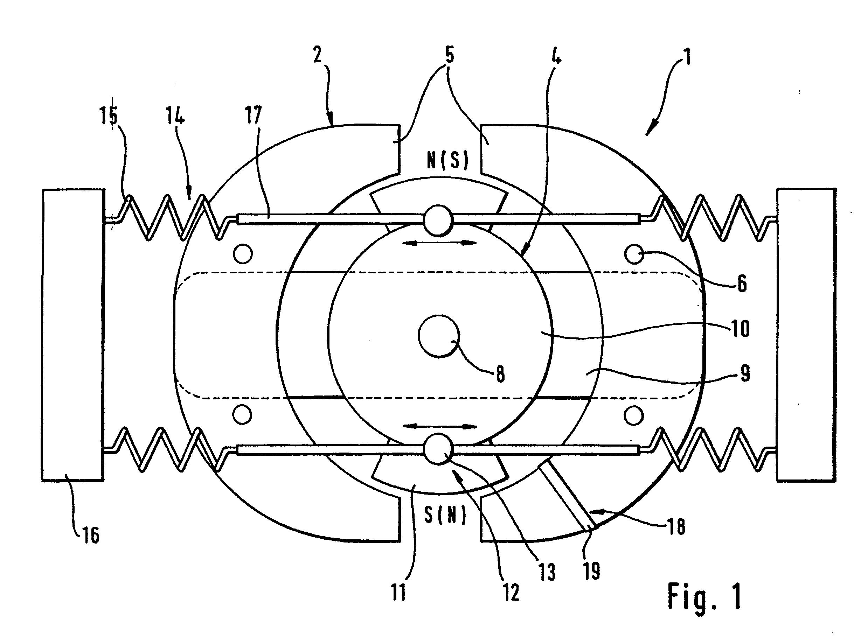

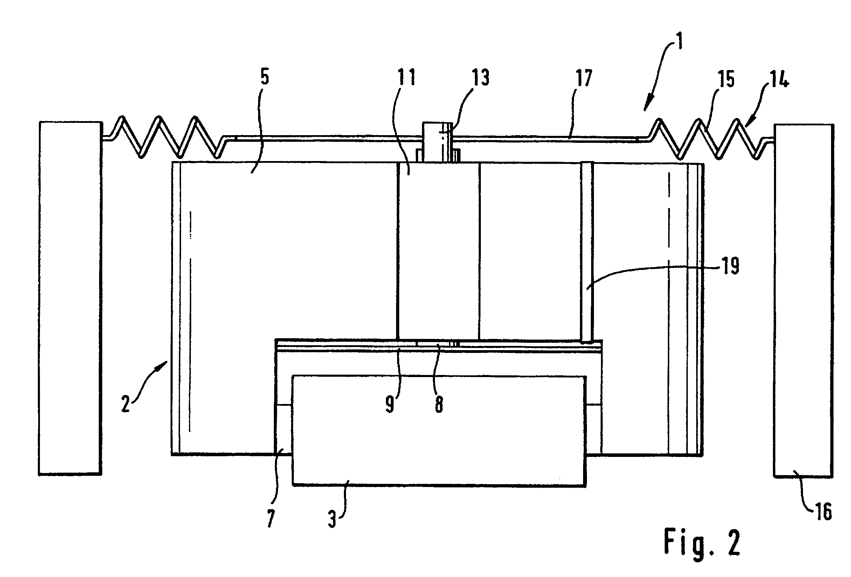

Der Permanentmagnet-Motor 1 der erfindungsgemäßen Ausführung einer Antriebseinrichtung nach den Figuren 1 und 2 besitzt einen Stator 2 mit einer Erregerwicklung 3 und als Bewegungselement einen Rotor 4, der im Feld des Stators 2 angeordnet ist.

Der Stator 2 besitzt ein Statorjoch mit zwei jeweils in etwa halbkreisförmig gebogenen Polschuhen 5, die zwischen sich einen kreiszylindrischen Raum begrenzen. Die Polschuhe 5 sind aus bogenförmigen Eisenblechen aufgebaut, die sich senkrecht zu der Längsachse des von den Polschuhen 5 begrenzten Innenraums erstrecken. Die Eisenbleche sind mittels Zentrierstiften 6 zueinander positioniert. Die beiden Polschuhe sind an einer Unterseite durch einen Rückschluß 7, der vorzugsweise ebenfalls aus Eisenblechen aufgebaut ist, miteinander verbunden. Um den Rückschluß 7 ist die Erregerwicklung 3 gewickelt (vgl. Figur 2). Der Stator 2 kann auch anstelle der Eisenbleche aus einem anderen weichmagnetischen Material mit einer hohen Permeabilität aufgebaut sein.

Der Rotor 4 ist in den Zwischenraum zwischen den beiden Hälften des Stators 2 angeordnet und erstreckt sich mit seiner Drehachse 8 entlang der Längsachse des zylindrischen Zwischenraums. Die Drehachse 8 des Rotors ist an der Unterseite und der Oberseite der Polschuhe 5 jeweils durch ein Lager drehbar gelagert. Hierzu ist jeweils ein geeignetes Lagerschild 9 an der Unter- und Oberseite der Polschuhe 5 vorgesehen. Der Rotor 4 könnte auch einseitig gelagert sein, vorzugsweise ist er jedoch beidseitig gelagert, da eine solche Lagerung eine höhere Steifigkeit bewirkt und einen kleineren Spalt zwischen Rotor und Polschuhen ermöglicht.

Der Rotor 4 weist einen Kern aus weichmagnetischem Material, insbesondere aus Eisen, auf, in dem die Drehachse 8 angeordnet ist. Der Kem 10 kann verschieden geformt sein, vorzugsweise ist er kreiszylindrisch im Querschnitt. Auf der Umfangsseite des Kerns 10 des Rotors 4 sind diametral gegenüberliegend zwei schalenförmige Permanentmagnete 11 angeordnet. Die Permanentmagnete 11 können sich jeweils in einem Sektor von bis zu 180° um den Kern 10 herum erstrecken. Insbesondere können sich die Permanentmagnete jeweils in einem Winkel von 40 bis 100°, insbesondere etwa 70° sektorenförmig um den Kern 10 erstrecken. Die Permanentmagneten können radial oder diametral magnetisiert sein. Die Magnetisierungsachsen zeigen bei beiden Permanentmagneten 11 in die gleiche Richtung, in Figur 1 also entweder nach oben oder nach unten. Die Permanentmagnete 11 sind derart auf dem Kern 10 angeordnet, daß sie in einer Ruhestellung des Rotors exakt gegenüber den Lücken zwischen den beiden Polschuhen 5 angeordnet sind (vgl. Figur 1).

Als Kopplungseinrichtung 12 zur Übertragung einer Antriebsbewegung des Rotors 4 auf in den Figuren 1 und 2 nicht näher dargestellte Messereinheiten eines Trockenrasierers trägt der Rotor 4 an seiner oberen Stimseite zwei vorspringende Mitnahmestifte 13, die mit den Messereinheiten verbunden werden und diese antreiben. Die Kopplungseinrichtung 12 ist also an der oberen Stimseite des Rotors 4 angeordnet. Die Mitnahmestifte 13 sind von der Drehachse 8 des Rotors beabstandet und vorzugsweise etwa am Außenumfang des Rotors angeordnet, um günstige Hebelverhältnisse zu bewirken. Wie Figur 1 zeigt, sind die Mitnahmestifte 13 insbesondere zwischen dem Kern 10 und den Permanentmagneten 11 des Rotors 4 angeordnet. Dies kann als Montage- bzw. Positionierhilfe für die Permanentmagneten 11 genutzt werden.

Während des Betriebs vollführt der Rotor 4 kleine Winkeloszillationen, wie später noch näher erläutert werden wird. Die maximalen Winkelamplituden liegen vorzugsweise im Bereich von ± 5 bis ± 20 , insbesondere etwa in der Größenordnung von ± 12 . Die kleinen Rotationswinkel bewirken eine rotatorische Schwingung der Mitnahmestifte in der Bewegungsrichtung der Schermesserblöcke, in Figur 1 von links nach rechts und umgekehrt. Die mit der Rotationsschwingung verbundenen Seitwärtsbewegungen quer zur Bewegungsrichtung der Schneideinheiten, in Figur 1 also nach oben und unten, sind sehr klein und betragen maximal etwa 0,1 mm. Diese kleinen Seitwärtsbewegungen können durch eine entsprechende Nachgiebigkeit der Kopplungseinrichtung quer zur eigentlichen Bewegungsrichtung ausgeglichen werden, insbesondere können die komplementären Ausnehmungen in den Messereinheiten, mit denen die Mitnahmestifte 13 in Eingriff sind, als Langlöcher ausgebildet sein. Durch die Anordnung der Mitnahmestifte 13 auf gegenüberliegenden Seiten der Drehachse 8 werden die kleinen Rotationsschwingungen des Rotors 4 in eine gegenläufige rotatorische Hin- und Herbewegung der an die Mitnahmestifte 13 angekoppelten Messereinheiten des Trockenrasierers umgewandelt. Die Gegenläufigkeit verringert Gehäuseschwingungen und Geräuschemissionen. Außerdem sind die Messereinheiten über den Rotor 4 starr miteinander gekoppelt. Sie schwingen exakt gegenläufig mit der gleichen Frequenz.

Um eine möglichst hohe Schwingungsamplitude der Messereinheiten und einen möglichst hohen Wirkungsgrad des Antriebs zu erzielen, ist es vorteilhaft, den Rotor 4 mit einer federartigen Rückstellkraft um die in Figur 1 gezeigte Ruheposition zu versehen und die Anregungsfrequenz gleich der Resonanzfrequenz des gekoppelten elektro-mechanischen Feder-Masse-Systems zu wählen, wie später noch näher erläutert werden wird. Als Rückstelleinrichtung 14 sind bei der Ausführung gemäß den Figuren 1 und 2 vier Spiralfedern 15 vorgesehen, die den Rotor 4 nach Auslenkungen aus der Ruhelage in diese zurück stellen. Die Rückstellfedem 15 sind dabei jeweils mit einem Ende an einer Rückstellfixierung 16, beispielsweise einem Abschnitt des Rasierergehäuses, fest angelenkt und mit ihrem jeweils anderen Ende mit dem Rotor 4 gekoppelt. Die Rückstellfedem 15 greifen hierbei nicht an der Drehachse 8 des Rotors 4 an, sondern sind von dieser beabstandet exzentrisch am Körper des Rotors 4 angelenkt, insbesondere sind sie mit den Mitnahmestiften 13 der Kopplungseinrichtung 12 verbunden. Wie Figur 1 zeigt, sind die Rückstellfedem 15 jeweils über Rückstellkopplungselemente 17 paarweise mit einem der Mitnahmestifte 13 verbunden. Als Rückstellkopplungselemente sind jeweils starre Stäbe oder Platten vorgesehen, die in etwa mittig vorzugsweise drehbar an den Mitnahmestiften 13 angelenkt sind.

Vorzugsweise werden die Rückstellkopplungselemente 17, anders als in Figur 1 gezeichnet, mit hinreichender Breite ausgeführt, so daß sie das obere Lagerschild 9 überdecken und sich nach außen bis zum Rand des Stators 2 erstrecken. Die Rückstellkopplungselemente 17 und der obere Lagerschild 9 dichten auf diese Weise das Motorinnere gegen Schmutzhaare und Feuchtigkeit ab. Es ist also vorzugsweise eine Abdichtung des Motorinneren vorgesehen.

Anstelle der beschriebenen Ankopplung der Rückstellfedern 15 an die Mitnahmestifte 13 könnten die Federn auch zwischen die Enden der vom Rotor 4 angetriebenen Messereinheiten und entsprechenden Rückstellfederfixierungen, beispielsweise dem Rasierergehäuse geschaltet sein. Die Federn stützen sich dann an einem Ende an den Messereinheiten und am anderen Ende am Rasierergehäuse ab.

Um die Schwingungsbewegung des Rotors 4 zu erfassen, ist eine Erfassungseinrichtung 18 vorgesehen, die eine Sensorspule 19 aufweist, die den von den Permanentmagneten 11 ausgehenden magnetischen Fluß aufnimmt. An dem Rotor 4 angebrachte Hilfsmagneten sind dabei nicht nötig. Wie Figur 1 zeigt, ist die Sensorspule 19 in den Stator 2 integriert. Die Sensorspule 19 ist hierbei einfach um einen Zahn eines Polschuhs 5 gewickelt. Bewegt sich der Rotor 4 mit den Permanentmagneten 11, wird die Sensorspule 19 von einem veränderlichen Magnetfluß durchflossen. Die hierdurch hervorgerufene Induktionsspannung ist ein Maß für die Drehgeschwindigkeit des Rotors 4 und kann als Schwingungssignal verwendet werden. Die in die Sensorspule 19 induzierte Spannung enthält auch einen Anteil vom veränderlichen Strom der Erregerwicklung 3. Dieser Anteil überlagert sich als Störsignal dem eigentlichen Schwingungssignal. Dieser Störanteil wird durch eine Kompensationseinrichtung, wie später noch näher erläutert werden wird, kompensiert.

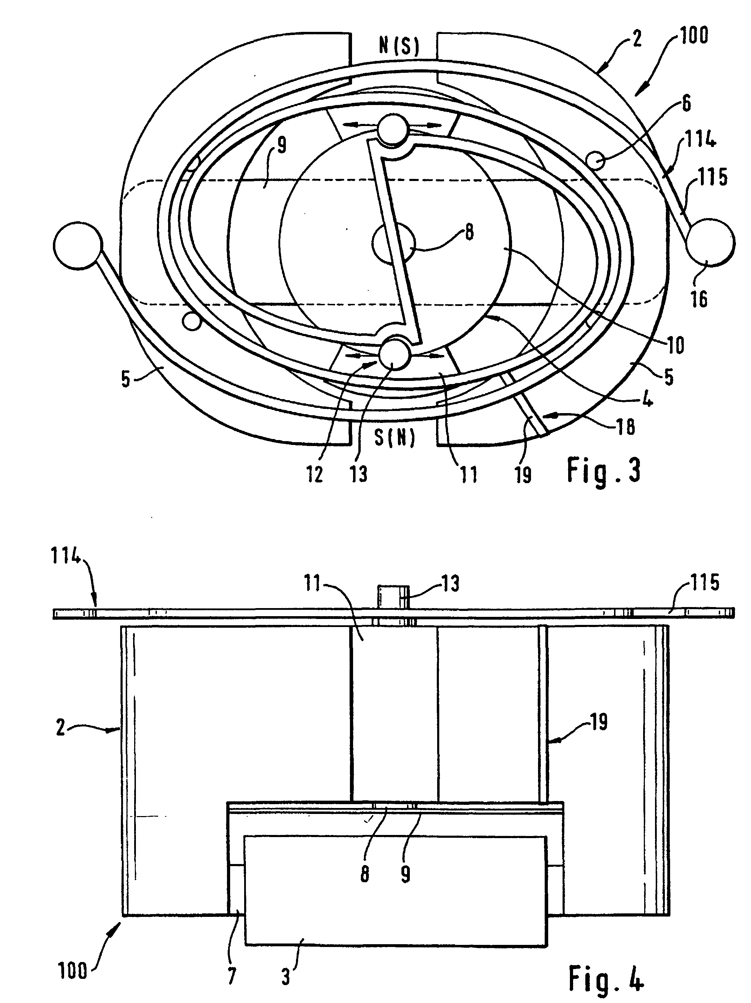

Anstelle der vier Schraubenfedern kann als Rückstelleinrichtung 114 auch eine ebene, spiralförmige Torsionsfeder vorgesehen sein. Die Torsionsfeder 115 greift an den beiden Mitnahmestiften 13 des Rotors 4 an und ist mit ihren äußeren Enden am Stator 2 oder einem anderen Fixpunkt des Rasierergehäuses angebracht. Die Verwendung einer derartigen Torsionsfeder 115 erlaubt einen besonders kompakten Aufbau des Permanentmagnetmotors 100. Die Ausführung gemäß den Figuren 3 und 4 entspricht im übrigen der Ausführung gemäß den Figuren 1 und 2. Entsprechende Bauteile sind mit den gleichen Bezugsziffern wie in Figur 1 und 2 bezeichnet.

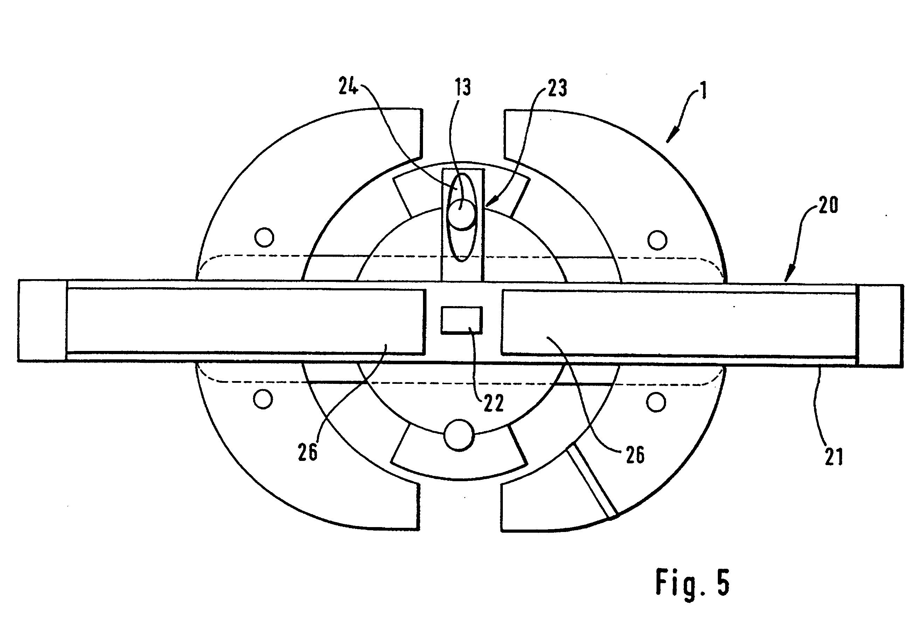

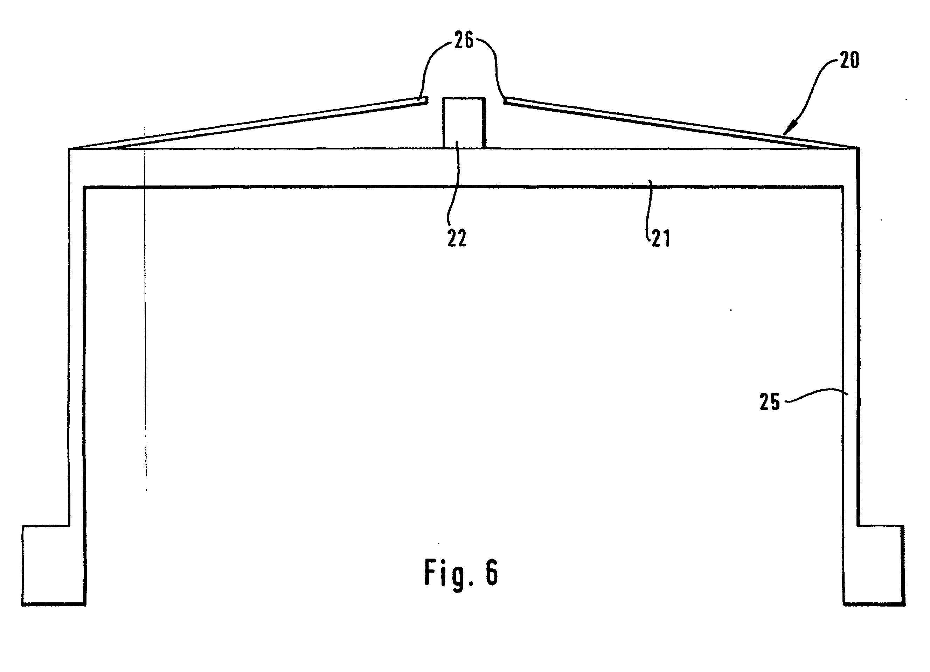

An die beiden Mitnahmestifte 13 können auch mehr als zwei Schneideinheiten angekoppelt werden. Insbesondere kann an einen der beiden Mitnahmestifte 13 neben einer Schermessereinheit auch noch ein Mittelschneider angekoppelt sein, wie er bei modernen Rasiererscherköpfen zwischen den beiden seitlichen parallelen Schermesserblöcken angeordnet ist. Wie Figur 5 zeigt, kann der nicht näher dargestellte Mittelschneider mittels einer Schwingbrücke 20 mit einem der Mitnahmestifte 13 in Wirkverbindung stehen. Die Schwingbrücke 20 weist hierzu ein Bewegungselement 21 auf, das in etwa mittig über der Stirnseite des Rotors 4 angeordnet ist und parallel zur Bewegungsrichtung der Messereinheiten, gemäß Figur 5 also von links nach rechts und umgekehrt, linear beweglich gelagert ist. Das Bewegungselement 21 weist einen Mitnehmer 22 auf, der mit dem Mittelschneider in Eingriff bringbar ist und die Bewegung des Bewegungselements 21 auf den Mittelschneider überträgt. Das Bewegungselement 21 selbst wird durch einen der Mitnehmerstifte 13 bewegt. Hierzu weist das Bewegungselement 21 ein starres Koppelelement 23 auf, das mit dem Bewegungselement 21 starr verbunden ist und mit dem Mitnehmerstift 13 in Eingriff steht. Hierzu weist das Koppelelement 23 eine Ausnehmung 24 auf, in die der Mitnehmerstift 13 eingreift. Die Ausnehmung 24 ist dabei als Langloch ausgebildet, dessen Längsachse senkrecht zur Bewegungsrichtung des Bewegungselements 21 verläuft, um den Anteil der Antriebsbewegung des Mitnehmerstiftes 13 quer zur Bewegungsrichtung des Bewegungselements 21, der durch die rotatorische Bewegung des Rotors 4 entsteht, auszugleichen. In Richtung der Bewegung des Bewegungselements 21 ist der Eingriff zwischen dem Koppelelement 23 und dem Mitnehmerstift 13 jedoch spielfrei, das heißt die Ankopplung der Schwingbrücke 20 an den Rotor 4 ist in dieser Bewegungsrichtung kinematisch starr, um Vibrationen und Geräuschemissionen zu verringern und ein exaktes Schwingen des Rotors 4 zu ermöglichen. Die Schwingbrücke 20 ist mittels Blattfedern 25 quasi linear beweglich gelagert. Wie Figur 6 zeigt, erstrecken sich die Blattfedern 25 im wesentlichen senkrecht zu dem Bewegungselement 21, mit dessen enden sie mit jeweils einem ihrer Enden verbunden sind. Die Blattfedem 25 erstrecken sich seitlich an dem Stator 2 entlang nach unten und sind mit ihrem jeweils anderen Ende an einer entsprechenden Fixierung, beispielsweise am Rasierergehäuse fest gelagert. Wie Figur 6 zeigt, ist die Schwingbrücke 20 mit einer Andruckfeder 26 versehen, die den nicht näher dargestellten Mittelschneider nach oben drückt. Bei Belastung kann der Mittelschneider etwas nach unten ausweichen. Die Andruckfeder 26 sollte hierbei eine kleinere Kraft erzeugen, als die Andruckfedern der beidseitig des Mittelschneiders angeordneten Schermesserblöcke. Die Andruckfeder 26 weist dabei vorzugsweise zwei blattfederartige Federschenkel auf, die sich oberhalb des Bewegungselements 21 erstrecken und sich von diesem federnd nach oben wegspreizen.

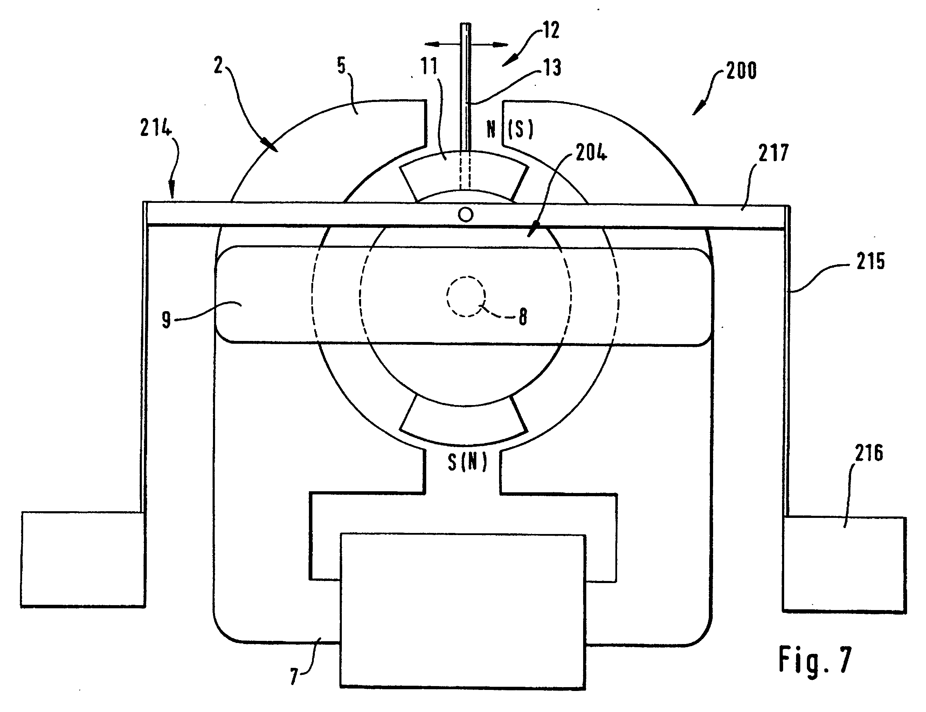

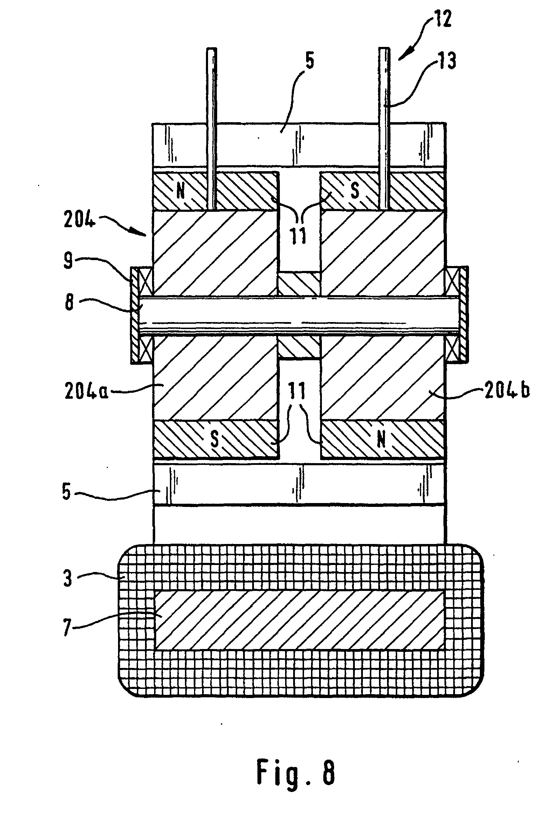

Eine weitere erfindungsgemäße Ausführung eines Permanentmagnet-Motors 200 zeigen die Figuren 7 und 8. Den vorherigen Ausführungsformen entsprechende Bauteile sind mit denselben Bezugsziffern gekennzeichnet. Bei dieser Ausführungsform ist eine Rotoreinheit 204 nicht stehend mit ihrer Stirnseite den Messereinheiten zugewandt, sondern um 90° gedreht liegend angeordnet, so daß eine Umfangsseite der Rotoreinheit 204 den Messereinheiten des Rasierers zugewandt ist. Die Kopplungseinrichtung 12 ist dementsprechend nicht an einer Stimseite der Rotoreinheit 204, sondern an der den Messereinheiten zugewandten Umfangsseite angeordnet. Die Kopplungseinrichtung 12 weist ebenfalls Mitnahmestifte 13 auf, die in entsprechender Weise mit den Messereinheiten in Eingriff sind und diese antreiben. Wie die Figuren 7 und 8 zeigen, sind die Mitnahmestifte 13 senkrecht zur Umfangsseite der Rotoreinheit 204 angeordnet; sie stehen senkrecht auf die Drehachse 8 der Rotoreinheit 204 und stehen von der Umfangsseite in radialer Richtung über diese hinaus und erstrecken sich zwischen einer der beiden Lücken zwischen den zwei Polschuhen des Stators hindurch und ragen über den Stator hinaus.

Die Rotoreinheit 204 kann grundsätzlich als integrale Einheit aufgebaut sein. In diesem Fall sind die Mitnahmestifte 13 der Kopplungseinrichtung 12 ebenfalls starr miteinander verbunden. Die Messereinheiten, die den verschiedenen Mitnahmestiften 13 zugeordnet sind, schwingen in diesem Fall gleichphasig in dieselbe Richtung. Dies besitzt den Vorteil einer starren Kopplung der verschiedenen Messereinheiten zueinander.

Vorzugsweise jedoch besitzt die Rotoreinheit 204 zwei voneinander unabhängige Rotoren 204a und 204b (vgl. Figur 8), die unabhängig voneinander bewegbar sind. Um eine kompakte Anordnung und einen einfachen Aufbau der Rotoreinheit 204 zu erreichen, sind die beiden Rotoren 204a und 204b vorteilhafterweise zueinander koaxial ausgerichtet und auf einer gemeinsamen Drehachse 8 angeordnet. Um einen besonders vibrationsarmen Betriebs des Motors zu erreichen, sind die Rotoren 204a und 204b entgegengesetzt magnetisiert, das heißt die Permanentmagneten 11 sind auf den beiden Rotoren 204a und 204b in gegensätzlicher Orientierung angeordnet (vgl. Figur 8). Dementsprechend bewegen sich die Rotoren 204a und 204b und damit die jeweils angekoppelten Messereinheiten immer gegenläufig, wodurch sich die Trägheiten nicht nur der Messereinheiten, sondern auch der Rotoren gegenseitig kompensieren. Auf diese Weise werden Schwingungen des Gehäuses und Geräuschemissionen wirkungsvoll verringert.

Wie Figur 7 zeigt, liegt der Rückschluß 7, der von der Erregerwicklung 3 umgeben ist, in einer Ebene, die nicht wie bei der Ausführung gemäß Figur 1 senkrecht zur Drehachse 8 steht, sondern zu dieser parallel liegt.

Die Rückstelleinrichtung 214 weist bei der Ausführung nach Figur 7 und 8 Blattfedern 215 auf, die an einem ihrer Enden starr mit einer Rückstellfixierung 216 verbunden sind. Mit ihren anderen Enden sind sie mittels eines Rückstellkopplungselements 217 von der Drehachse 8 beabstandet mit jeweils einem der Rotoren 204a und 204b verbunden. Die Rückstellfedern 216 beaufschlagen dabei den jeweiligen Rotor mit einer Rückstellkraft, die den Rotor nach Auslenkungen in die Ruhestellung zurückstellt. Obwohl nicht eigens dargestellt, können die Rotoren jedoch auch durch andere Rückstellfedern in ihre Ruhelage zurückgestellt werden, insbesondere kann auch eine spiralförmige Torsionsfeder ähnlich Figur 3 hierzu verwendet sein.

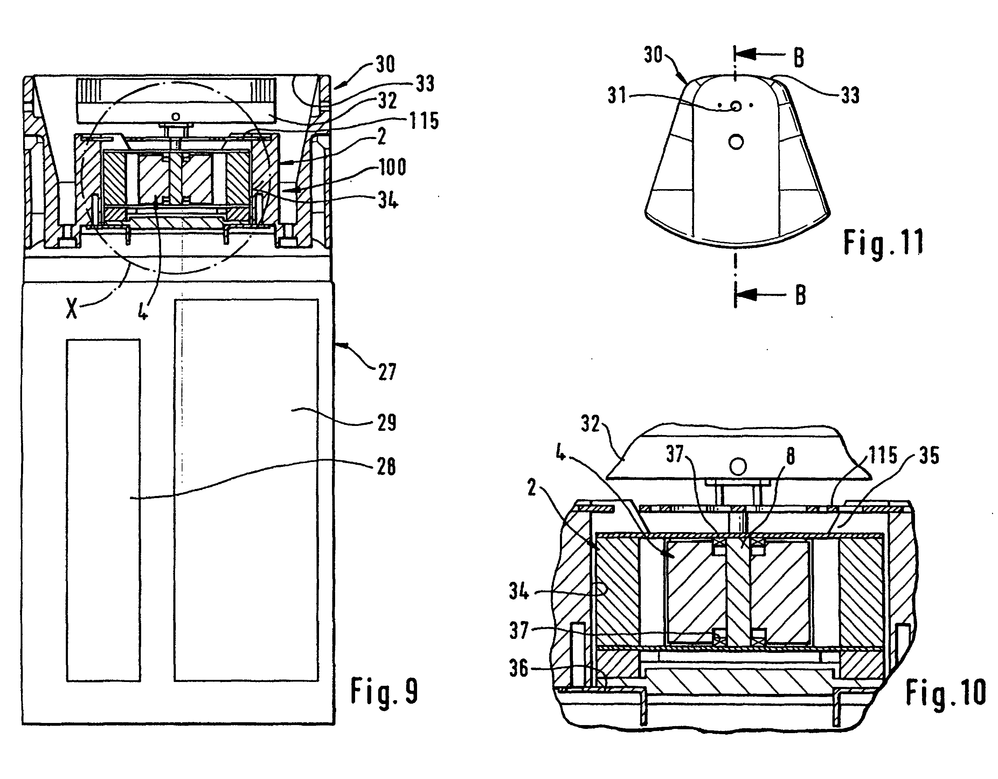

Figur 9 zeigt in detaillierter Darstellung die erfindungsgemäße Ausführung eines Trockenrasierers, bei dem eine Antriebseinrichtung mit einem Permanentmagnet-Motor 100 ähnlich der Ausführung der Figuren 3 und 4 mit stehend angeordnetem Rotor und einer spiralförmigen Torsionsfeder zur Rückstellung des Rotors 4 vorgesehen ist. Der Trockenrasierer besitzt ein Rasierergehäuse 27, in dem zum einen ein Akku 28 zur Stromversorgung des Antriebs und eine Ansteuereinheit 29 zur Ansteuerung des Permanentmagnet-Motor 100 aufgenommen ist (vgl. Figur 9). An einem oberen Ende des Rasierergehäuses 27 ist ein Schwenkkopf 20 vorgesehen, der um eine Schwenkachse 31 relativ zu dem Rasierergehäuse 27 schwenkbar an diesem gelagert ist. In dem Schwenkkopf 30 sind ein Paar Schneideinheiten 32 vorgesehen, die unter einer an der Stimseite des Schwenkkopfs 30 angeordneten Scherfolie 33 angeordnet sind und zusammen mit dem Schwenkkopf 30 verschwenkbar sind. Die Schneideinheiten 32 werden von dem Permanentmagnet-Motor 100 in einer Richtung, die parallel zu der Schwenkachse 32 ist, oszillierend hin- und herbewegt.

Wie Figur 9 zeigt, ist die Antriebseinrichtung für die Schneideinheiten 32 in den Schwenkkopf 30 integriert, so daß diese zusammen mit dem Schwenkkopf 30 hin- und hergeschwenkt werden kann. Der Schwenkkopf 30 weist hierzu eine Antriebsaufnahme 34 auf, in der der Permanentmagnet-Motor 100 aufgenommen ist. Der Permanentmagnet-Motor 100 ist mit dem Schwenkkopf 30 fest verbunden. Die Antriebsaufnahme 34 ist in etwa komplementär zu der Außenkontur des Stators 2 ausgebildet, so daß diese in die Antriebsaufnahme 34 eingesetzt werden kann (vgl. Figuren 9 und 10). Die Antriebsaufnahme 34 besitzt auf einer Seite einen Anlagevorsprung 35, gegen den der Permanentmagnet-Motor 100 geschoben werden kann. Der Permanentmagnet-Motor 100 wird mittels einer Befestigungsplatte 36 fixiert, die an der Antriebsaufnahme 34 befestigt wird und diese vorsprungartig verschließt (vgl. Figur 10). Der Rotor 4 ist im Bereich seiner beiden Stirnseiten jeweils durch eine Lagerung 37 drehbar mit der Drehachse 8 verbunden. Die Drehachse 8 ist auf beiden Stirnseiten des Rotors 4 mit Lagerschilden 9 verbunden, die radial über den Rotor 4 vorspringen und mit dem Stator 2 fest verbunden sind. Anstelle der drehbaren Lagerung des Rotors an der Drehachse 8 kann selbstverständlich auch die Drehachse 8 mit dem Rotor fest verbunden sein und drehbar an den Lagerschilden 9 angelenkt sein.

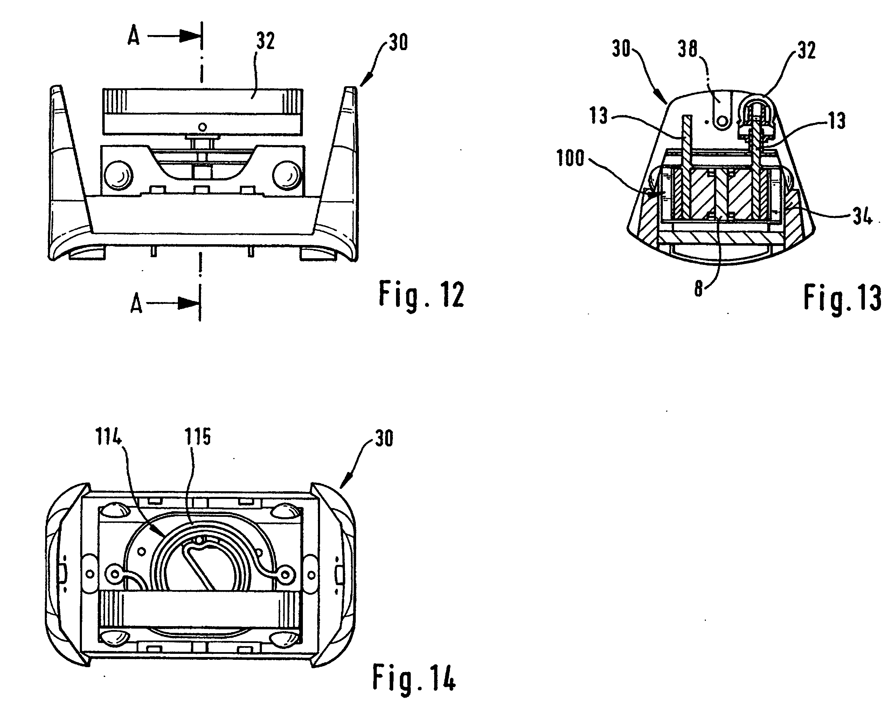

Die Schneideinheiten 32 sitzen unmittelbar auf den zur Stimseite des Schwenkkopfs 30 hin vorspringenden Mitnehmerstiften 13 (vgl. Figur 13) und werden von diesen oszillierend entsprechend der Bewegung des Rotors 4 angetrieben. Die Mitnehmervorrichtung zur Ankopplung des Mittelschneiders 38 ist in Figur 13 nicht dargestellt; von den beiden Schneideeinheiten 32 ist nur eine dargestellt.

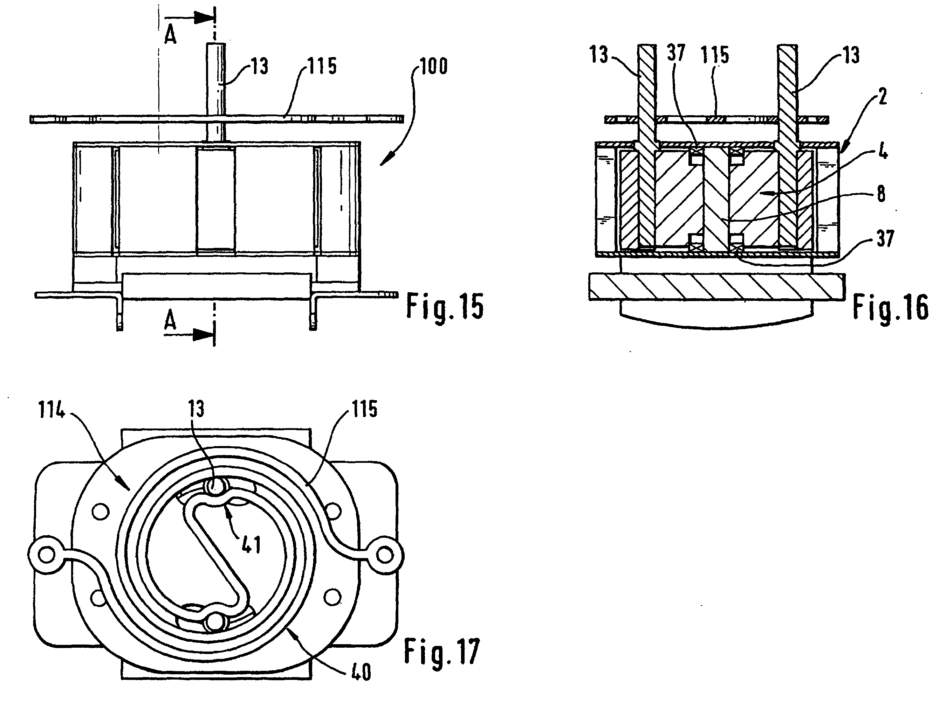

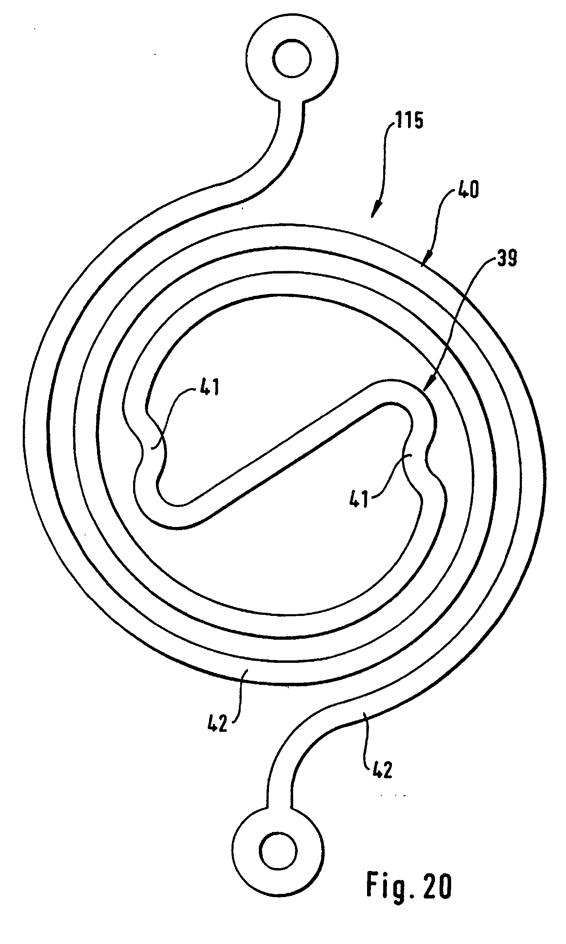

Als Rückstelleinrichtung 114 für den Rotor 4 weist die Antriebseinrichtung eine Rückstellfeder 115 auf, die zwischen den Schneideinheiten 32 und der oberen Stirnseite des Rotors 4 angeordnet ist (vgl. Figur 10, 13, 16 und 17). Die Rückstellfeder 115 ist in Figur 20 näher dargestellt. Sie besitzt einen Befestigungsabschnitt 39 zur Befestigung am Rotor 4 und einen den Befestigungsabschnitt 39 umgebenden Spiralabschnitt 40. Die Feder ist insgesamt eben. Wie Figur 20 zeigt, ist der Befestigungsabschnitt 39 im wesentlichen Z-förmig ausgebildet und weist ein Paar sich gegenüberliegende, zueinander im wesentlichen parallele Eingriffsabschnitte 41 auf, mit denen die Rückstellfeder 115 zwischen den Mitnahmestiften 13 verspannt werden kann. Die Eingriffsabschnitte 41 weisen dabei schalenförmige Mulden auf, die zur Aufnahme der Mitnehmerstifte 13 vorgesehen sind (vgl. Figur 17). Der Spiralabschnitt 40 besitzt ein Paar Spiralarme 42, die sich von den Eingriffsabschnitten 41 aus spiralförmig nach außen erstrecken (vgl. Figur 20). Die Enden der Spiralarme 42 sind mit dem Schwenkkopf 30 fest verbunden. Die aus Federstahl bestehende Rückstellfeder 115 übt auf die Mitnehmerstifte 13 eine Rückstellkraft aus, die den Rotor 4, wenn dieser ausgelenkt ist, in die Ruhestellung zurückstellen, so daß dieser um die Ruhelage Drehschwingungen ausführen kann. Die Rückstellfeder 115 ist dabei in Verbindung mit der Masse des Rotors 4 und der Masse der Schneideinheiten 32 derart ausgebildet, daß die Resonanzfrequenz des Federmassesystems sehr hoch, vorzugsweise im Bereich von etwa 10⁴/Minute liegt.

Vorzugsweise sind ein oder mehrere Rotoren mit mehreren (ingesamt insbesondere 2) Messereinheiten bzw. Messerblöcken vorgesehen, die gegenüber dem Stator ein Schwingungssystem mit Einzelmassen M1, M2 und einzelnen Kraftkonstanten K1 und K2 definieren, wobei das Verhältnis aus Kraftkonstante und Masse für ein Schwingsystem angenähert gleich dem für ein anderes Schwingsystem gehalten ist. Die Massen in den Schwingungssystemen sind etwa einander gleich.

Nachfolgend soll die Ansteuerung und Regelung des Permanentmagnet-Motors näher erläutert werden. Die zuvor beschriebenen Ausführungsformen des Permanentmagneten-Motors können in derselben Weise angesteuert und geregelt werden.

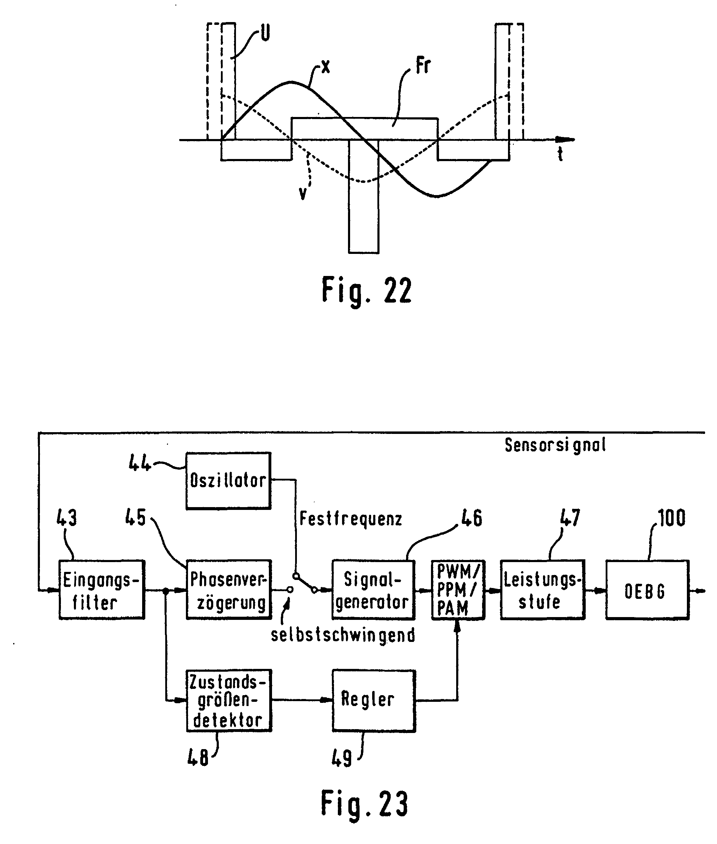

Der Permanentmagnet-Motor wird mit elektrischer Energie niedriger Spannung aus dem Akku versorgt, wobei er jedoch nicht mit einer Gleichspannung, sondern einer geschalteten Spannung gespeist wird. Die Ansteuereinheit 29 versorgt die Erregerwicklung 3 mit bipolaren Spannungspulsen (vgl. U in Figur 22). Die Spannungspulse stoßen den Rotor etwa in den Nulldurchgängen der Schwingung, dort wo die Geschwindigkeit maximal ist, an. Durch die positiven und negativen Pulse ist es möglich, den Rotor 4 bei der Hin- und Herbewegung jeweils in die richtige Richtung zu beschleunigen. Um mit der Ansteuereinheit 29 die Rotorschwingung exakt steuern zu können, muß der momentane Schwingungszustand des Rotors 4 möglichst genau detektiert werden, und ein entsprechendes Signal bereitgestellt werden, das an die Ansteuereinheit 29 zurückgekoppelt werden kann. Im folgenden wird die Signalverarbeitung der Erfassungseinrichtung 18 näher erläutert.

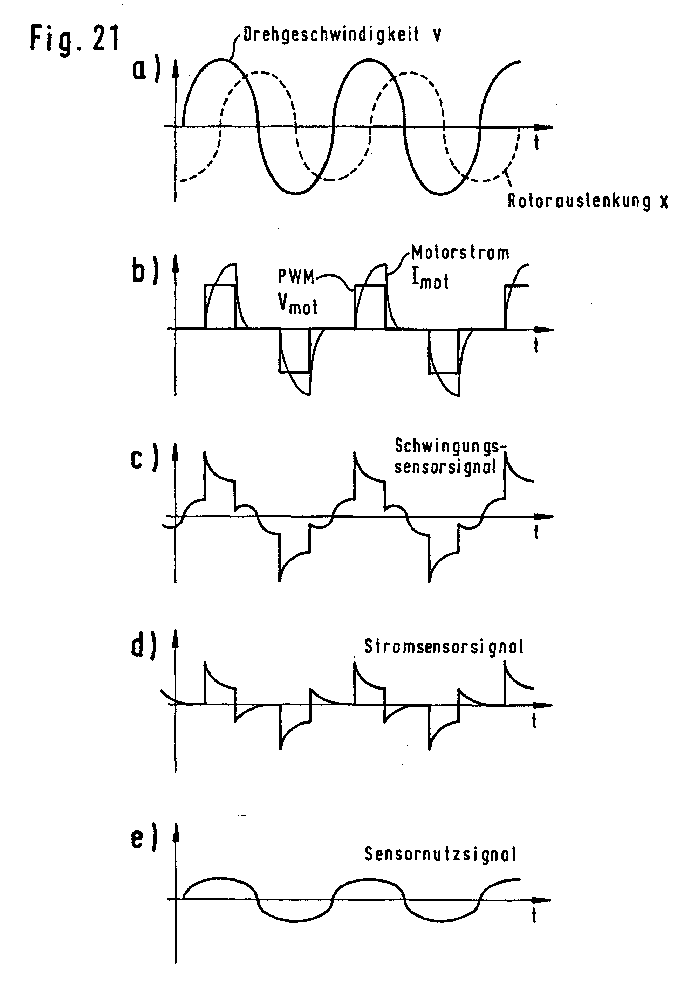

Mit der Sensorspule 19 wird der magnetische Fluß aufgenommen, der von den Permanentmagneten 11 ausgeht und in der Sensorspule eine Induktionsspannung hervorruft. Figur 21C zeigt den zeitlichen Verlauf, der in der Sensorspule 19 induziert wird, wenn der Rotor 4 mit der in Figur 21A gezeigten Drehgeschwindigkeit schwingt. Das Schwingungssensorsignal, das heißt die in der Sensorspule 19 induzierte Spannung, ist von Störkomponenten überlagert. Ein Tiefpaßfilter 43 am Eingang der Sensorsignalverarbeitung dämpft höher frequente Oberwellen, um ein der Rotordrehgeschwindigkeit proportionales Signal zu erhalten. Diese Reduzierung der Störkomponenten reicht allerdings noch nicht aus. Zusätzlich zum Fluß der Permanentmagneten 11 induziert der zum Motorstrom, das heißt zum Strom in der Erregerwicklung 3, proportionale magnetische Fluß der Erregerwicklung 3 in der Sensorspule 19 eine Spannung, deren Grundwelle ebenfalls im Ausgangssignal des Eingangsfilters enthalten ist. Bliebe die Grundwelle dieser Stromkomponente unberücksichtigt, dann würde diese als Fehleranteil im Signal der Sensorspule 19 die Erfassung der Schwingung des Rotors 4 verfälschen und Störungen im Betrieb des Motors verursachen. Eine Kompensationseinrichtung zur Kompensierung dieses Fehleranteils weist einen Stromsensor zur Erfassung des Stroms in der Erregerwicklung 3 auf, mit dessen Hilfe der Strom in der Erregerwicklung 3 separat detektiert wird. Dieser Stromsensor kann aus einem weichmagnetischen Ring bestehen, durch den eine Leitung der Stromzuführung des Motors geführt wird. Der durchfließende Motorstrom induziert in einem zweiten Draht, welcher in mehreren Windungen auf den Ring aufgebracht sein kann, eine Spannung, die als Stromsensorsignal bereitgestellt wird und den in Figur 21D gezeigten zeitlichen Verlauf besitzt, wenn der Motorstrom Iₘₒₜ in der Erregerwicklung 3 den in Figur 21B gezeigten Verlauf besitzt. Bei dem in Figur 21B gezeigten Verlauf des Motorstroms Iₘₒₜ ist zu beachten, daß beim Ansteuern der Erregerwicklung 3 mit Spannungspulsen, die in Figur 21B mit PWM bezeichnet sind, der von den sprunghaften, rechteckigen Spannungspulsen hervorgerufene Motorstrom aufgrund der Induktivität der Erregerwicklung 3 nicht sprunghaft ansteigt, sondern den in Figur 21B gezeigten haifischflossenförmigen Verlauf erhält.

Die in dem Stromsensor induzierte Spannung ist dem Verlauf der Stromkomponente, das heißt des Fehleranteils, im Signal der Sensorspule 19 proportional. Hierbei ist zu beachten, daß aufgrund der Konstruktion des Motors der Einfluß des Drehwinkels des Rotors 4 auf den Verlauf des Erregerflusses vernachlässigbar ist. Der Permanentmagnet-Motor 100 verwendet einen Rotor 4 mit kreisförmigem Querschnitt und Permanentmagneten 11, deren Permeabilität sich nur geringfügig von der Eigenschaft des Luftspaltes unterscheidet, so daß der Einfluß des Drehwinkels des Rotors 4 näherungsweise vernachlässigbar ist. Durch Subtraktion des Stromsensorsignales des Stromsensors gemäß Figur 21D von dem Ausgangssignal der Sensorspule 19 gemäß Figur 21C nach ihrer entsprechenden Gewichtung kann der Fehleranteil nahezu vollständig kompensiert werden. Hierzu weist die Kompensationseinrichtung eine entsprechende Subtraktionseinheit zur Subtraktion des Stromsensorsignales vom Signal der Sensorspule 19 auf.

Nach einer anschließenden Tiefpaßfilterung der Differenz der beiden Signale mittels eines Tiefpaßfilters ergibt sich dann ein Signalverlauf, welcher in jeglichen Betriebszuständen des Motors unabhängig vom Tastgrad, das heißt der Breite der Spannungspulse, ein Maß für die Rotordrehgeschwindigkeit ist. Der Signalverlauf ist in Figur 21E dargestellt und als Sensornutzsignal bezeichnet. Damit wird für unterschiedliche Lasten ein Betrieb des Motors mit konstanter Geschwindigkeit der Schneideinheiten bei seiner Resonanzfrequenz ermöglicht.

In Figur 23 ist das Blockschaltbild des Gesamtsystems aus Permanentmagnet-Motor 100 und Ansteuereinheit 29 gezeigt. Wie die Figur 23 zeigt, kann der obere Signalpfad zwischen einem Betrieb des Motors in einer selbstschwingenden Schleife oder dem Betrieb des Motors mit einer festen Frequenz, die von einem Oszillator 44 vorgegeben wird, betrieben werden. Der untere Signalpfad repräsentiert die Regelung des Schwingungszustands des Rotors 4.

Das Eingangsfilter 43 enthält den oben beschriebenen Tiefpaßfilter und die Kompensationseinrichtung zur Kompensation des Fehleranteils im Signal der Sensorspule 19 und führt eine Pegelanpassung des Sensorsignales durch. Ist das Sensomutzsignal von Störgrößen wie beispielsweise Oberwellen überlagert, so werden diese im Eingangsfilter 43 gedämpft.

Beim Betrieb der Antriebseinrichtung in einer selbstschwingenden Schleife ist die Schwingungsfrequenz des Permanentmagnet-Motors 100 durch die Frequenz gegeben, bei der die Phasenverschiebung zwischen den Punkten 1 und 1' des Signalpfads gemäß Figur 23 bei offener Schleife bei 360° beträgt. Mit Hilfe einer einstellbaren Phasenverzögerung 45 zwischen den Punkten 2 und 3 des Signalpfads wird diese Frequenz auf das Resonanzmaximum abgeglichen. Ein nachfolgender Signalgenerator 46 erzeugt ein zur Rotorschwingung synchrones Signal, welches die zeitliche Folge der bipolaren Antriebsspannungspulse bestimmt, die über eine Leistungsstufe 47 wie zum Beispiel eine Vollbrücke den Motor 100 antreiben.

Bei einer Festfrequenzansteuerung des Motors legt der Oszillator 44 die Frequenz des Signalgenerators und damit die zeitliche Folge der bipolaren Spannungspulse fest, wobei die Frequenz vorzugsweise in etwa auf die Resonanzfrequenz des Federmassesystems aus Rotor 4 und Rückstelleinrichtung 114 festgelegt wird.

Zur Regelung des Betriebs des Motors wird das gefilterte Sensornutzsignal gemäß Figur 21E einem Detektor 48 zugeführt, der aus diesem Signal den Ist-Wert der zu regelnden Zustandsgröße ermittelt. Bei dem periodischen Signalverlauf gemäß Figur 21E ist dies vorzugsweise ein Spitzenwertdetektor, der den jeweiligen Spitzenwert dieses Signales detektiert. Eine Ein-Weg-Gleichrichtung erlaubt die Detektion eines Ist-Wertes pro Schwingungsperiode; eine Zwei-Wege-Gleichrichtung erlaubt zwei Abtastwerte pro Periode und damit eine schnellere Reaktion der Regelung zum Beispiel auf Laststöße. Als Ist-Wert könnte auch ein mittlerer Wert des Sensornutzsignales, wie beispielsweise der Effektivwert, verwendet werden. Vorzugsweise wird jedoch die Amplitude des Sensornutzsignales verwendet. Der detektierte Ist-Wert wird einem Regler 49 zugeführt, der in analoger Technik zum Beispiel als PI-Regler ausgeführt sein kann. Alternativ kann eine Analog-Digital-Wandlung der detektierten Zustandsgröße vorgenommen und die Regelung in digitaler Technik unter Verwendung eines Schaltwerks oder eines M-Kontrollers ausgeführt werden.

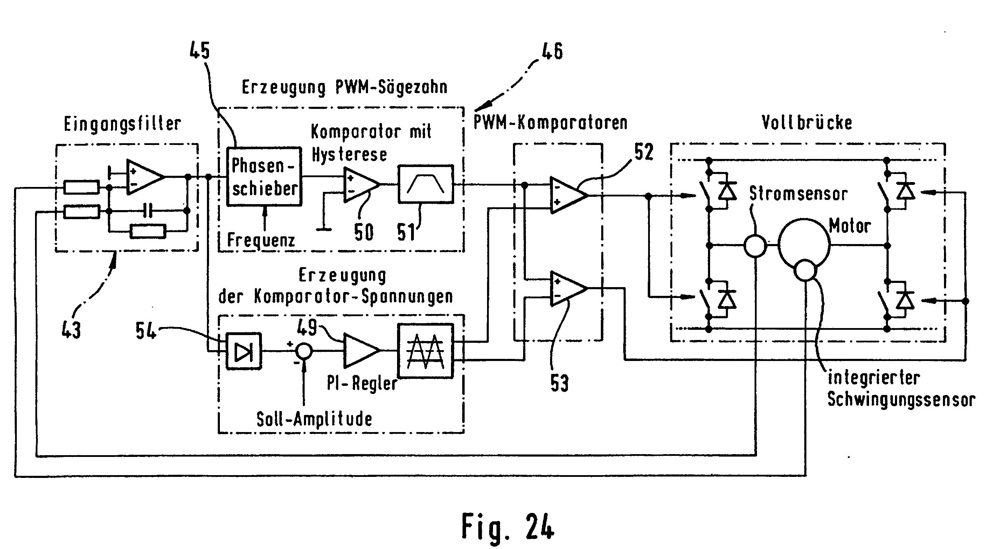

Zur Steuerung des Schwingungszustandes wird das Ausgangssignal des Signalgenerators vom Regler 49 moduliert. Die Modulation kann dabei grundsätzlich auf verschiedene Arten erfolgen, beispielsweise durch Puls-Phasen-Modulation (PPM), durch Puls-Amplituden-Modulation (PAM) oder durch Puls-Weiten-Modulation (PWM). Nachfolgend wird die bevorzugte Puls-Weiten-Modulation anhand des detaillierten Blockschaltbilds der selbstschwingenden Ansteuerung gemäß Figur 24 näher erläutert. Deutlich erkennbar ist darin die Schleifenstruktur des Systems. Auf der linken Seite des Diagramms werden die Signale der Erfassungseinrichtung 18 über das Eingangsfilter 43 in die Ansteuereinheit 29 zurückgespeist. Das Sensomutzsignal wird dem Phasenschieber 45 zugeführt, der die Phasenverzögerung bestimmt und damit die Betriebsfrequenz des Motors festlegt.

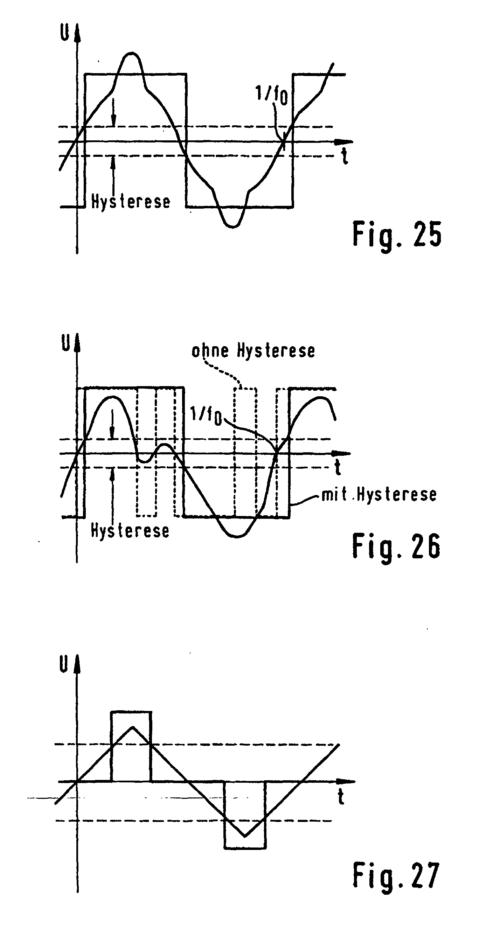

Zur Erzeugung eines bipolaren Spannungspulssignales wird das Sensomutzsignal im Signalgenerator 46 zunächst in ein synchrones Rechtecksignal umgewandelt. Dies erfolgt unter Verwendung eines Komparators 50 (vgl. Figur 34). Das Rechtecksignal, welches zur Generierung der bipolaren Spannungspulse verwendet wird, muß in jeglichem Betriebszustand des Motors in fester Phasenbeziehung zur Schwingung des Rotors 4 stehen. Das Rechtecksignal wird durch den Komparator 50 synchron zu den Nulldurchgängen des Sensomutzsignales erzeugt, wie dies in Figur 25 und 26 anhand zweier Halbwellen des Sensomutzsignales verdeutlicht ist. Sind Oberwellen im Sensomutzsignal durch das Eingangsfilter 43 ausreichend gedämpft, so sind diese Störkomponenten auch im Bereich der Nulldurchgänge klein gegenüber dem Sensornutzsignal und es ergibt sich der in Figur 25 dargestellte Verlauf.

Sind die verbleibenden Oberwellenanteile zu groß, dann kann dies, wie in Figur 26 dargestellt, zu mehrfachen Nulldurchgängen innerhalb einer halben Schwingungsperiode des Rotors 4 führen. Damit würde sich ein fehlerhaftes Rechtecksignal ergeben. Aus diesem Grund wird der Komparator 50 mit einer Hysterese ausgeführt, so daß sich unabhängig von verbleibenden Störgrößen im Sensomutzsignal ein den Anforderungen gerechtes Rechtecksignal ergibt.

Das Rechtecksignal wird einem Signalgenerator 51 zugeführt, der als Bandpaßfilter ausgebildet ist (Vgl. Figur 24). Die Eckfrequenzen des Bandpaßfilters sind derart ausgewählt, daß der Bandpaßfilter ein näherungsweise dreieckförmiges Ausgangssignal liefert. Weist das zugeführte Rechtecksignal aufgrund von Störkomponenten im Sensomutzsignal einen asymmetrischen Tastgrad auf, dann sichert die Abkopplung von Gleichspannungsanteilen im Bandpaßfilter einen zum Bezugspotential symmetrischen Verlauf des Dreiecksignals.

Das von dem Signalgenerator 51 bereitgestellte Dreiecksignal wird in einer nachfolgenden Stufe mittels zweier Komparatoren 52 und 53 mit zwei variablen Gleichspannungssignalen verglichen (vgl. Figur 27). Durch die Schnittstellen des Gleichspannungssignales mit dem Dreiecksignal wird die Breite der bipolaren Spannungspulse festgelegt. Auf diese Weise wird aus dem oberen Gleichspannungssignal und dem Dreiecksignal ein positiver Spannungspuls und aus dem unteren Gleichspannungssignal und dem Dreiecksignal ein negativer Spannungspuls erzeugt. Die Pulsweite dieser Spannungspulse kann variiert werden, das heißt die Pulsweite kann moduliert werden (Puls-Weiten-Modulation), indem der obere Gleichspannungspegel nach oben bzw. unten und der untere Gleichspannungspegel simultan nach unten bzw. oben verschoben wird. Mit dieser Art der Generierung der Puls-Weiten-Modulation wird eine zu den Spitzen des Dreiecksignals symmetrische Verbreiterung bzw. Verschmälerung der Antriebspulse erreicht (vgl. Figur 27). Aufgrund der festen Phasenbeziehung zwischen dem Sensomutzsignal und dem Dreiecksignal bleibt auch bei einer Veränderung des Tastgrades eine starre Phasenkopplung zwischen dem rückgekoppelten Sensomutzsignal der Erfassungseinrichtung 18 und der Grundwelle der Antriebspulse erhalten. Dies sichert bei unterschiedlichen Lasten den Betrieb des Motors in konstanter Phasenbeziehung zwischen antreibender Spannung und Rotorgeschwindigkeit und damit in Resonanz.

Hierdurch ergibt sich ein besserer Wirkungsgrad des Antriebs im Vergleich zu einer Puls-Weiten-Modulation, bei der der Startzeitpunkt der Antriebspulse vorgegeben und nur durch Variation des Endzeitpunkts die Breite der Antriebspulse festgelegt wird und dementsprechend eine vom Tastgrad abhängige Phasenverschiebung zwischen dem rückgekoppelten Sensorsignal und der Grundwelle der Antriebspulse verursacht wird.

Zur Regelung des Schwingungszustands des Permanentmagnet-Motors 100 wird das gefilterte und von Fehleranteilen befreite Sensomutzsignal der Erfassungseinrichtung 18 dem Spitzenwertdetektor 54 zugeführt, der die jeweilige Amplitude der Schwingungen des Sensomutzsignales bestimmt. Dieser Amplitudenwert ist aufgrund der Kompensation der Fehleranteile ein direktes Maß der maximalen Drehgeschwindigkeit des Rotors 4. Der detektierte Amplitudenwert wird mit einem Soll-Wert verglichen und das Differenzsignal einem geeigneten Regler, zum Beispiel einem PI-Regler 49 zugeführt. Das Ausgangssignal des Reglers steuert die simultane Verschiebung der beiden Gleichspannungspegel, welche die Spannungspulsbreite der Antriebspulse bestimmen und so eine Regelung der Schwingungsamplitude bewirken.

Alternativ zu der analogen Regelung kann gemäß einer weiteren Ausführung der Erfindung die Funktion des Dreiecksignals durch eine digitale Schaltung in Form eines auf- und abwärts zählenden Zählers realisiert werden. In der nachfolgenden Stufe wird dann der Zählerstand mit Hilfe von digitalen Komparatoren mit dem Ausgangswert eines digitalen Reglers verglichen und auf diese Weise der bipolare Spannungspuls generiert.

Der dem Regler 49 zugeführte Soll-Wert der Drehgeschwindigkeit kann fest vorgegeben sein. In einer Ausführungsform der Erfindung kann der Soll-Wert durch den Benutzer des Trockenrasierers innerhalb festgelegter Grenzen in diskreten Stufen oder stufenlos variiert werden. Hierdurch kann durch den Benutzer die Geschwindigkeit der Schneideinrichtung innerhalb vorgegebener Grenzen so eingestellt werden, daß für jeden Hauttyp eine optimale Rasur mit minimaler Hautreizung erzielt wird. Alternativ kann durch Berücksichtigung des Funktionalen Zusammenhangs zwischen Geschwindigkeit und Schwingungsamplitude der Schneideinrichtung bei gegebener Schwingungsfrequenz die Schwingungsamplitude vorgewählt werden. Der Regler berechnet dann die zugehörige Geschwindigkeit für die gegebene Schwingungsfrequenz und steuert die dem Antrieb zugeführte Energie so, daß bei unterschiedlichen Lasten die Schwingungsamplitude konstant bleibt.

Besonders vorteilhaft bei der erfindungsgemäßen Antriebseinrichtung ist die Tatsache, daß die Schwingungsregelung sehr schnell erfolgen kann. Schon von einer Halbschwingung bis zur nächsten Halbschwingung kann die Pulsbreite der Antriebspulse beeinflußt werden. Dies führt zu einer konstanten Rasierqualität und zu einer Verkürzung der Rasierzeit. Bei konventionellen Antrieben mit nicht ausreichend steifer Kopplung zwischen Motorachse und Schneideinrichtung ist eine derartig schnelle Regelung nicht möglich. Deshalb ist bei diesen Antrieben durch Regelung nur eine im zeitlichen Mittel konstante Schwingung zu erzielen.

## Patentansprüche

1. Antriebseinrichtung zum Antreiben einer rotatorisch oszillierend bewegbaren Arbeitseinheit (32) von elektrischen Produkten des persönlichen Bedarfs, insbesondere Trockenrasierer, mit einem Permanentmagnet-Motor (1, 100, 200), der einen Stator (2) mit einer Erregerwicklung (3) und einen im Statorfeld angeordneten, um eine Drehachse (8) drehbar gelagerten Rotor (4, 104) mit mindestens einem Permanentmagneten (11) aufweist, einer Rückstelleinrichtung (14, 114, 214) zur Rückstellung des Rotors in eine Ruhelage derart, daß der Rotor um die Ruhelage schwingen kann, einer Kopplungseinrichtung (12) zur Kopplung des Rotors mit der Arbeitseinheit, wobei die Kopplungseinrichtung von der Drehachse beabstandet mit dem Rotor verbunden ist und einer Erfassungseinrichtung (18) zur Erfassung der Schwingbewegungen des Rotors, **dadurch gekennzeichnet, daß** die Antriebseinrichtung mit einer Ansteuereinheit (29) zur Ansteuerung des Permanentmagnet-Motors in Abhängigkeit der erfaßten Schwingbewegung versehen ist, wobei Frequenzsteuermittel (44; 45, 46, 47, 49) zur Ansteuerung des Permanentmagnet-Motors mit einer etwa der Resonanzfrequenz des Rotors entsprechenden Frequenz vorgesehen ist.

2. Antriebseinrichtung nach Anspruch 1, wobei der Rotor (4, 204) einen Kern (10) aus einem weichmagnetischen hochpermeablen Material und Pole (11) aus permanentmagnetischem Material aufweist.

3. Antriebseinrichtung nach Anspruch 1, wobei der Rotor (4) vollständig aus permanentmagnetischem Material ist.

4. Antriebseinrichtung nach einem der vorhergehenden Ansprüche, wobei die Rückstelleinrichtung (14, 114, 214) mit dem Rotor (4) von dessen Drehachse (8) beabstandet verbunden ist.

5. Antriebseinrichtung nach einem der vorhergehenden Ansprüche, wobei die Rückstelleinrichtung (14, 114) mit der Kopplungseinrichtung (12) in Wirkverbindung ist.

6. Antriebseinrichtung nach einem der vorhergehenden Ansprüche, wobei die Rückstelleinrichtung (114) eine Rückstellfeder (115) mit einem Befestigungsabschnitt (39) zur Befestigung am Rotor (4) und einen den Befestigungsabschnitt umgebenden Spiralabschnitt (40) aufweist.

7. Antriebseinrichtung nach einem der vorhergehenden Ansprüche, wobei die Rückstelleinrichtung (114) eben ist.

8. Antriebseinrichtung nach Anspruch 6 oder 7, wobei der Befestigungsabschnitt (39) im wesentlichen Z-förmig mit einem Paar sich gegenüberliegenden, zueinander im wesentlichen parallelen Eingriffsabschnitten (41) ausgebildet ist und der Spiralabschnitt (40) ein Paar Spiralarme (42), die sich von den Eingriffsabschnitten aus spiralförmig nach außen erstrecken, aufweist.

9. Antriebseinrichtung nach einem der vorhergehenden Ansprüche, wobei die Kopplungseinrichtung (12) in der Bewegungsrichtung der Arbeitseinheit (32) kinematisch starr und senkrecht zur Bewegungsrichtung der Arbeitseinheit nachgiebig ausgebildet ist.

10. Antriebseinrichtung nach einem der vorhergehenden Ansprüche, wobei die Kopplungseinrichtung (12) ein erstes Kopplungselement 13, das fest mit dem Rotor (4, 204) verbunden ist, und ein zweites Kopplungselement, das fest mit der Arbeitseinheit verbunden ist, aufweist, wobei die beiden Kopplungselemente miteinander in Eingriff sind.

11. Antriebseinrichtung nach Anspruch 10, wobei das eine Kopplungselement (13) ein Stift und das andere Kopplungselement eine Ausnehmung (24), insbesondere ein Langloch, ist.

12. Antriebseinrichtung nach einem der vorhergehenden Ansprüche, wobei ein Paar Kopplungseinrichtungen (12) vorgesehen sind, die verschiedenen Arbeitseinheiten (32) zugeordnet sind und auf gegenüberliegenden Seiten der Drehachse (8) des Rotors (4) angeordnet sind derart, daß die Arbeitseinheiten gegenläufig angetrieben werden.

13. Antriebseinrichtung nach Anspruch 12, wobei die Kopplungseinrichtungen (12) durch den Rotor (4) starr miteinander verbunden sind.

14. Antriebseinrichtung nach einem der Ansprüche 1 bis 11, wobei mehrere Rotoren (204) vorgesehen sind, die jeweils einer Arbeitseinheit (32) zugeordnet sind, wobei vorzugsweise die Rotoren eine gemeinsame Drehachse (8) besitzen.

15. Antriebseinrichtung nach Anspruch 12, wobei die Rotoren (204) unterschiedliche Magnetisierungsrichtungen aufweisen, derart, daß sie gegenläufig schwingen.

16. Antriebseinrichtung nach einem der vorhergehenden Ansprüche, wobei die Kopplungseinrichtung (12) auf einer Stirnseite des Rotors (4) angeordnet ist.

17. Antriebseinrichtung nach einem der vorhergehenden Ansprüche, wobei die Kopplungseinrichtung (12) auf einer Umfangsseite des Rotors (204) angeordnet ist.

18. Antriebseinrichtung nach einem der vorhergehenden Ansprüche, wobei die Erfassungseinrichtung (18) in den Stator (2) integriert ist.

19. Antriebseinrichtung nach einem der vorhergehenden Ansprüche, wobei die Erfassungseinrichtung (18) eine Sensoreinrichtung (19) zur Erfassung eines von dem Permanentmagneten (11) des Rotors (4, 204) ausgehenden magnetischen Flusses aufweist.

20. Antriebseinrichtung nach Anspruch 18 oder 19, wobei die Erfassungseinrichtung (18) eine Kompensationseinrichtung (43) zur Kompensation eines Fehleranteils im Signal der Sensoreinrichtung (19) aufweist.

21. Antriebseinrichtung nach Anspruch 20, wobei die Kompensationseinrichtung (43) einen Stromsensor zur Erfassung eines Motorstroms (I_{MOT}) und eine Subtraktionseinheit zur Subtraktion eines Stromsensorsignales vom Signal der Sensoreinrichtung (19) aufweist.

22. Antriebseinrichtung nach einem der vorhergehenden Ansprüche wobei die Ansteuereinheit (29) eine Regeleinrichtung (48) zur Regelung der dem Motor zugeführten elektrischen Energie in Abhängigkeit der Schwingbewegung des Rotors (4, 204) aufweist.

23. Antriebseinrichtung nach Anspruch 22, wobei die Regeleinrichtung (48) einen Spitzenwertdetektor (54) zur Erfassung eines Signalspitzenwertes der Erfassungseinrichtung (18) aufweist und die dem Motor zugeführte Energie in Abhängigkeit des erfaßten Spitzenwerts regelt.

24. Antriebseinrichtung nach einem der vorhergehenden Ansprüche, wobei die Ansteuereinheit (29) einen Signalgenerator (46) zur Erzeugung bipolarer Spanngspulse und eine Modulationseinrichtung (50, 51, 52, 53, 49) zur Modulation der Spannungspulse in Abhängigkeit der Schwingbewegung des Rotors (4, 204) aufweist.

25. Antriebseinrichtung nach Anspruch 24, wobei der Signalgenerator (46) derart ausgebildet ist, daß die Spannungspulse in konstanter Phasenbeziehung zu der Schwingbewegung des Rotors (4, 204) erzeugt werden.

26. Antriebseinrichtung nach Anspruch 25, wobei die Regeleinrichtung (49) mindestens einen variablen Gleichspannungspegel erzeugt, welcher mittels geeigneter Komparatoren (52, 53) mit einem von dem Signalgenerator (51) synchron zur Schwingung des Rotors (2, 204) erzeugten Dreieckssignal verglichen wird und durch Pulsweitenmodulation eine Variation und Regelung der dem Motor zugeführten Energie und eine Regelung der Schwingungsamplitude der Arbeitseinheit bewirkt.

27. Antriebseinrichtung nach einem der vorhergehenden Ansprüche, wobei die Frequenzsteuermittel einen Oszillator (44) zur Ansteuerung des Motors mit einer vorgegebenen Frequenz aufweisen.

28. Antriebseinrichtung nach einem der vorhergehenden Ansprüche, wobei die Frequenzsteuermittel eine selbstschwingende Rückkopplungsschleife aufweisen, die insbesondere einen Phasenschieber (45) für das Signal der Erfassungseinrichtung (18), den Signalgenerator (46) zur Erzeugung bipolarer Spannungspulse, eine Leistungsstufe (47) zur Ansteuerung des Motors und die Regeleinrichtung (49) zur Regelung der dem Motor zugeführten elektrischen Energie umfaßt.

29. Trockenrasierer mit einer Antriebseinrichtung nach einem der vorhergehenden Ansprüche, wobei ein Rasierergehäuse (27), ein relativ zu dem Rasierergehäuse schwenkbarer Schwenkkopf (30) und zumindest eine von der Antriebseinrichtung antreibbare Schneideinheit (32), die in dem Schwenkkopf angeordnet ist, vorgesehen sind, wobei die Antriebseinrichtung in den Schwenkkopf integriert ist.

30. Trockenrasierer nach Anspruch (29), wobei die Antriebseinrichtung mit der Drehachse des Rotors (4) stehend angeordnet ist.

31. Trockenrasierer nach Anspruch (29), wobei die Antriebseinrichtung mit der Drehachse des Rotors (204) liegend angeordnet ist.

32. Trockenrasierer nach einem der vorhergehenden Ansprüche, wobei zwei Schneideinheiten (32) und ein Langhaarschneider (38) im Schwenkkopf angeordnet und von der Antriebseinrichtung angetrieben sind.

## Claims

1. A drive mechanism for driving a working unit (32), movable in a rotary oscillating manner, of electric products of personal use, particularly dry shavers, with a permanent magnet motor (1, 100, 200) which has a stator (2) with an exciter winding (3) and a rotor (4, 104) with at least one permanent magnet (11) positioned in the stator field and rotatably mounted on a shaft (8), with a reset device (14, 114, 214) for returning the rotor to a position of rest in such a way as to enable the rotor to oscillate about the position of rest, with a coupling device (12) for coupling the rotor to the working unit, wherein the coupling device is connected to the rotor in spaced relationship to the rotor shaft, and with a detecting device (18) for detecting the oscillatory motions of the rotor, **characterized in that** the drive mechanism is equipped with an actuating unit (29) for actuating the permanent magnet motor in response to the detected oscillatory motion, provision being made for frequency control elements (44; 45, 46, 47, 49) for actuating the permanent magnet motor with a frequency corresponding approximately to the resonant frequency of the rotor.

2. The drive mechanism as claimed in claim 1, wherein the rotor (4, 204) has a core (10) made of a soft magnetic material of high permeability and poles (11) made of a permanent magnetic material.

3. The drive mechanism as claimed in claim 1, wherein the rotor (4) is comprised completely of permanent magnetic material.

4. The drive mechanism as claimed in any one of the preceding claims, wherein the reset device (14, 114, 214) is connected to the rotor (4) in spaced relationship to the rotor shaft (8).

5. The drive mechanism as claimed in any one of the preceding claims, wherein the reset device (14, 114) is operatively associated with the coupling device (12).

6. The drive mechanism as claimed in any one of the preceding claims, wherein the reset device (114) includes a return spring (115) with a fastening section (39) for fastening to the rotor (4) and a coil section (40) surrounding the fastening section.

7. The drive mechanism as claimed in any one of the preceding claims, wherein the reset device (114) is of a plane configuration.

8. The drive mechanism as claimed in claim 6 or 7, wherein the fastening section (39) is constructed in an essentially Z-shaped configuration with a pair of engagement sections (41) lying opposite and essentially parallel to each other, and the coil section (40) is provided with a pair of coil arms (42) extending outwardly in spiral shape from the engagement sections.

9. The drive mechanism as claimed in any one of the preceding claims, wherein the coupling device (12) is constructed to be kinematically rigid in the direction of movement of the working unit (32) while being yielding in a direction perpendicular to the direction of movement of the working unit.

10. The drive mechanism as claimed in any one of the preceding claims, wherein the coupling device (12) includes a first coupling element (13) which is fixedly connected to the rotor (4, 204), and a second coupling element which is fixedly connected to the working unit, said two coupling elements being in engagement with each other.

11. The drive mechanism as claimed in claim 10, wherein the one coupling element (13) is a pin and the other coupling element is a cutout (24), particularly an elongate slot.

12. The drive mechanism as claimed in any one of the preceding claims, wherein provision is made for a pair of coupling devices (12) which are associated with various working units (32) and arranged on opposing sides of the shaft (8) of the rotor (4) in such a way that the working units are driven in counter-running direction.

13. The drive mechanism as claimed in claim 12, wherein the coupling devices (12) are rigidly interconnected by the rotor (4).

14. The drive mechanism as claimed in any one of the claims 1 to 11, wherein provision is made for several rotors (204), each of which is associated with one working unit (32), said rotors preferably having a common shaft (8).

15. The drive mechanism as claimed in claim 12, wherein the rotors (204) have different directions of magnetization such as to oscillate in opposite directions to each other.

16. The drive mechanism as claimed in any one of the preceding claims, wherein the coupling device (12) is arranged on an end of the rotor (4).

17. The drive mechanism as claimed in any one of the preceding claims, wherein the coupling device (12) is arranged on a peripheral side of the rotor (204).

18. The drive mechanism as claimed in any one of the preceding claims, wherein the detecting device (18) is integrated in the stator (2).

19. The drive mechanism as claimed in any one of the preceding claims, wherein the detecting device (18) comprises a sensor device (19) for detecting a magnetic flux created by the permanent magnet (11) of the rotor (4, 204).

20. The drive mechanism as claimed in claim 18 or 19, wherein the detecting device (18) includes a compensating device (43) to compensate for an error content in the signal of the sensor device (19).

21. The drive mechanism as claimed in claim 20, wherein the compensating device (43) has a current sensor for detecting a motor current (Iₘₒₜ) and a subtraction unit for subtracting a current sensor signal from the signal of the sensor device (19).

22. The drive mechanism as claimed in any one of the preceding claims, wherein the actuating unit (29) includes a control device (49) to control the electric energy fed to the motor in response to the oscillatory motion of the rotor (4, 204).

23. The drive mechanism as claimed in claim 22, wherein the control device (49) includes a peak value detector (54) for detecting a signal peak value from the detecting device (18) and controls the energy fed to the motor in response to the detected peak value.

24. The drive mechanism as claimed in any one of the preceding claims, wherein the actuating unit (29) includes a signal generator (46) for producing bipolar voltage pulses, and provision is made for a modulating device (50, 51, 52, 53, 49) for modulation of the voltage pulses as a function of the oscillatory motion of the rotor (4, 204).

25. The drive mechanism as claimed in claim 24, wherein the signal generator (46) is configured such that the voltage pulses are generated in a constant phase relationship to the oscillatory motion of the rotor (4, 204).

26. The drive mechanism as claimed in claim 25, wherein the control device (49) generates at least one variable direct voltage level which is compared, by means of suitable comparators (52, 53), to a triangular signal generated by the signal generator (51) synchronously with the oscillation of the rotor (2, 204), and wherein pulse-duration modulation effects a variation and control of the energy supplied to the motor as well as a control of the amplitude of oscillation of the working unit.

27. The drive mechanism as claimed in any one of the preceding claims, wherein the frequency control elements include an oscillator (44) for actuating the rotor with a predetermined frequency.

28. The drive mechanism as claimed in any one of the preceding claims, wherein the frequency control elements have a self-oscillating feedback loop which includes in particular a phase shifter (45) for the signal of the detecting device (18), the signal generator (46) for generating bipolar voltage pulses, a power stage (47) for actuating the motor, and the control device (49) for controlling the electric energy fed to the motor.

29. A dry shaver with a drive mechanism according to any one of the preceding claims, wherein provision is made for a shaver housing (27), a pivot head (30) pivotal relative to the shaver housing, and at least one cutter unit (32) arranged in the pivot head and adapted to be driven by the drive mechanism, said drive mechanism being integrated in the pivot head.

30. The dry shaver as claimed in claim 29, wherein the drive mechanism with the shaft of the rotor (4) is arranged in a standing position.

31. The dry shaver as claimed in claim 29, wherein the drive mechanism with the shaft of the rotor (204) is arranged in a lying position.

32. The dry shaver as claimed in any one of the preceding claims, wherein two cutter units (32) and one long hair cutter (38) are arranged in the pivot head and driven by the drive mechanism.

## Revendications

1. Dispositif d'entraînement pour entraîner une unité de travail (32) déplaçable selon un mouvement rotatif oscillatoire d'articles électriques à usage personnel, notamment de rasoir fonctionnant à sec, comportant un moteur à aimants permanents (1,100,200), qui comporte un stator (2) possédant un enroulement d'excitation (3) et un rotor (4,104) disposé dans le champ statorique et pouvant tourner autour d'un axe de rotation (8) et comportant au moins un aimant permanent (11), et comportant un dispositif de rappel (14,114,214) pour ramener le rotor dans une position de repos de telle sorte que le rotor peut osciller autour de la position de repos, un dispositif de couplage (12) pour coupler le rotor de l'unité de travail, le dispositif de couplage étant relié au rotor à distance de l'axe de rotation, et un dispositif de détection (18) servant à détecter les mouvements d'oscillation du rotor, **caractérisé en ce que** le dispositif d'entraînement comporte une unité de commande (29) pour commander le moteur à aimants permanent en fonction du mouvement oscillatoire détecté, des moyens (44;45,46,47,49) de commande de la fréquence étant prévus pour commander le moteur à aimants permanents avec une fréquence qui correspond approximativement à la fréquence de résonance du rotor.

2. Dispositif d'entraînement selon la revendication 1, dans lequel le rotor (4,204) comporte un noyau (10) formé d'un matériau magnétique doux hautement perméable, et des pôles (11) formés d'un matériau d'aimant permanent.

3. Dispositif d'entraînement selon la revendication 1, dans lequel le raccord (4) est réalisé entièrement en un matériau d'aimant permanent.

4. Dispositif d'entraînement selon l'une des revendications précédentes, dans lequel le dispositif de rappel (14,114,214) est relié au rotor (4) en étant situé à distance de l'axe de rotation (8) de ce dernier.

5. Dispositif d'entraînement selon l'une des revendications précédentes, dans lequel le dispositif de rappel (14,114) coopère avec le dispositif de couplage (12).

6. Dispositif d'entraînement selon l'une des revendications précédentes, dans lequel le dispositif de rappel (114) comporte un ressort de rappel (115) possédant une section de fixation (39) destinée à être fixée sur le rotor (4) et une section spirale (40) entourant la section de fixation.

7. Dispositif d'entraînement selon l'une des revendications précédentes, dans lequel le dispositif de rappel (114) est plat.

8. Dispositif d'entraînement selon la revendication 6 ou 7, dans lequel la section de fixation (39) est agencée essentiellement en forme de Z comportant un couple de sections opposées d'engrènement (41), qui sont essentiellement parallèles entre elles, et la section spirale (40) possède un couple de bras spiraux (42) qui s'étendent selon une forme spiralée vers l'extérieur à partir des sections d'engrènement.

9. Dispositif d'entraînement selon l'une des revendications précédentes, dans lequel le dispositif de couplage (12) est agencé de manière à être cinématiquement rigide dans la direction de déplacement d'une unité de travail (32) et de manière à fléchir perpendiculairement à la direction de déplacement de l'unité de travail.

10. Dispositif d'entraînement selon l'une des revendications précédentes, dans lequel le dispositif de couplage (12) comporte un premier élément de couplage (13), qui est relié rigidement au rotor (4,204), et un second élément de couplage, qui est relié rigidement à l'unité de travail, les deux éléments de couplage engrenant entre eux.

11. Dispositif d'entraînement selon la revendication 10, dans lequel un élément de couplage (13) est une tige et l'autre élément de couplage est un évidement (24), notamment un trou allongé.

12. Dispositif d'entraînement selon l'une des revendications précédentes, dans lequel il est prévu un couple de dispositifs de couplage (12), qui sont associés à différentes unités de travail (32) et sont disposés sur des côtés opposés de l'axe de rotation (8) du rotor (4) de telle sorte que les unités de travail sont entraînées en des sens opposés.

13. Dispositif d'entraînement selon la revendication 12, dans lequel les dispositifs de couplage (12) sont reliés entre eux rigidement au moyen du rotor (4).

14. Dispositif d'entraînement selon l'une des revendications 1 à 11, dans lequel il est prévu plusieurs rotors (204), dont chacun est associé à une unité de travail (32), les rotors possédant de préférence un axe de rotation commun (8).

15. Dispositif d'entraînement selon la revendication 12, dans lequel les rotors (204) possèdent des directions d'aimantation différentes de telle sorte qu'ils oscillent en des sens opposés.

16. Dispositif d'entraînement selon l'une des revendications précédentes, dans lequel le dispositif de couplage (12) est disposé sur une face frontale du rotor (4).

17. Dispositif d'entraînement selon l'une des revendications précédentes, dans lequel le dispositif de couplage (12) est disposé sur un côté circonférentiel du rotor (204).

18. Dispositif d'entraînement selon l'une des revendications précédentes, dans lequel le dispositif de détection (18) est intégré dans le stator (2).

19. Dispositif d'entraînement selon l'une des revendications précédentes, dans lequel le dispositif de détection (19) comporte un dispositif formant capteur (19) pour détecter un flux magnétique qui sort de l'aimant permanent (11) du rotor (4,204).

20. Dispositif d'entraînement selon la revendication 18 ou 19, dans lequel le dispositif de détection (19) comporte un dispositif de compensation (43) servant à compenser une composante du signal du dispositif formant capteur (19).

21. Dispositif d'entraînement selon la revendication 20, dans lequel le dispositif de compensation (43) comporte un capteur de courant pour détecter un courant du moteur (I_{MOT}) et une unité de soustraction pour soustraire un signal du capteur de courant, du signal du dispositif de détection (19).

22. Dispositif d'entraînement selon l'une des revendications précédentes, dans lequel l'unité de commande (29) comporte un dispositif de régulation (48) pour régler l'énergie électrique envoyée au moteur, en fonction du déplacement oscillatoire du rotor (4,204).

23. Dispositif d'entraînement selon la revendication 22, dans lequel le dispositif de régulation (48) comporte un détecteur de valeur maximale (54) pour détecter une valeur maximale du signal du dispositif de détection (18) et règle l'énergie envoyée au moteur, en fonction de la valeur maximale détectée.

24. Dispositif d'entraînement selon l'une des revendications précédentes, dans lequel l'unité de commande (29) comporte un générateur de signaux (46) pour produire les impulsions de tension bipolaires et un dispositif de modulation (50,51,52,53,49) pour moduler les impulsions de tension en fonction du déplacement oscillatoire du rotor (4,204).

25. Dispositif d'entraînement selon la revendication 24, dans lequel le générateur de signaux (46) est agencé de telle sorte que les impulsions de tension sont produites avec une relation de phase constante par rapport au déplacement oscillatoire du rotor (4,204).

26. Dispositif d'entraînement selon la revendication 25, dans lequel le dispositif de régulation (49) produit au moins un niveau de tension continue variable, qui est comparé au moyen de comparateurs appropriés (52,53), un signal triangulaire produit par le générateur de signaux (51) en synchronisme avec l'oscillation du rotor (2,204), et réalise, au moyen d'une modulation d'impulsions en durée, une variation et une régulation de l'énergie envoyée au moteur et une régulation de l'amplitude d'oscillation de l'unité de travail.

27. Dispositif d'entraînement selon l'une des revendications précédentes, dans lequel les moyens de commande de la fréquence comportent un oscillateur (44) pour commander le moteur avec une fréquence prédéterminée.

28. Dispositif d'entraînement selon l'une des revendications précédentes, dans lequel les moyens de commande de la fréquence comportent une boucle de réaction auto-oscillante, qui comprend notamment un déphaseur (45) pour le signal du dispositif de détection (18), le générateur de signaux (46) pour la production d'impulsions de tension, un étage de puissance (47) pour commander le moteur et le dispositif de régulation (49) pour régler l'énergie électrique envoyée au moteur.

29. Rasoir fonctionnant à sec comportant un dispositif d'entraînement selon l'une des revendications précédentes, dans lequel il est prévu un boîtier (27) du rasoir, une tête pivotante (30) pouvant pivoter par rapport au boîtier du rasoir, et au moins une unité de coupe (32), qui peut être entraînée par le dispositif d'entraînement et est disposée dans la tête pivotante, le dispositif d'entraînement étant intégré dans la tête pivotante.

30. Rasoir fonctionnant à sec selon la revendication 29, dans lequel le dispositif d'entraînement est disposé de telle sorte que l'axe de rotation du rotor (4) est vertical.

31. Rasoir fonctionnant à sec selon la revendication 29, dans lequel le dispositif d'entraînement est disposé de telle sorte que l'axe de rotation du rotor (204) est horizontal.

32. Rasoir fonctionnant à sec selon l'une des revendications précédentes, dans lequel deux unités de coupe (32) et une unité de coupe pour poils longs (38) disposées dans la tête pivotante sont entraînées par le dispositif d'entraînement.
